# EUROPEAN PATENT SPECIFICATION

(11) **EP 3 355 085 B1**
(45) Date of publication and mention of the grant of the patent: **07.10.2020**
(21) Application number: 16866298.9
(22) Date of filing: 15.11.2016
(51) Int. Cl.: G02B 1/118

(54) **OPTICAL BODY, MASTER, AND METHOD FOR MANUFACTURING OPTICAL BODY**
OPTISCHER KÖRPER, MASTER UND VERFAHREN ZUR HERSTELLUNG EINES OPTISCHEN KÖRPERS
CORPS OPTIQUE, MAÎTRE, ET PROCÉDÉ DE FABRICATION DE CORPS OPTIQUE

(30) Priority: 16.11.2015 JP 2015224316; 14.11.2016 JP 2016221302
(43) Date of publication of application: 01.08.2018
(60) Divisional application: 20191990.9
(73) Proprietor: Dexerials Corporation, Tokyo 141-0032 (JP)
(72) Inventor: HAYASHIBE, Kazuya, Tokyo 141-0032 (JP); KAJIYA, Shunichi, Tokyo 141-0032 (JP)
(74) Representative: Müller-Boré & Partner Patentanwälte PartG mbB
(86) International application number: PCT/JP2016/083775
(87) International publication number: WO 2017/086296

(56) References cited:
- WO-A1-2011/013401
- WO-A1-2014/051082
- JP-A- 2006 201 371
- JP-A- 2008 158 204
- JP-A- 2011 059 264
- JP-A- 2014 006 390
- JP-A- 2014 006 390
- US-A1- 2012 087 012
- US-A1- 2014 063 609
- US-A1- 2015 247 954

## Description

### Technical Field

The present invention relates to an optical body, a master, and a method for manufacturing an optical body.

### Background Art

Typically, with display devices such as televisions, and optical elements such as camera lenses, in order to reduce surface reflections and increase transmitted light, a reflection-reducing treatment is performed on the light-incident face. For example, one proposal for such a reflection-reducing treatment is to form, on the light-incident face, an optical body in which a concave-convex structure is formed on the surface thereof. Herein, the concave-convex structure formed on the surface of the optical body is formed by multiple convexities and concavities, in which the array pitch between the convexities and the array pitch between the concavities are less than or equal to the visible light wavelengths.

On the surface of such an optical body, changes in the refractive index with respect to incident light become gradual, and thus sudden changes in the refractive index that cause reflections do not occur. Consequently, by forming such a concave-convex structure on the surface of the light-incident face, reflections of incident light can be restrained over a wide wavelength range.

Patent Literatures 1 to 3 disclose technology related to such an optical body. In the technology disclosed in Patent Literature 1, in order to prevent poor filling of transfer material into a mold, convexity losses of the transfer product due to separation resistance, and pattern collapse of the convexities in the transferred fine concave-convex structure, dense clusters of convexities are arranged randomly on the surface of the optical body.

In the technology disclosed in Patent Literature 2, in order to inhibit the occurrence of diffracted light, the array pattern of concavities and convexities is shifted from a regular polygonal array pattern. In the technology disclosed in Patent Literature 3, in order to control the array pitch of concavities and convexities and the like easily, the concavities and convexities are formed randomly by sputtering. In the technology disclosed in Patent Literature 4, concavities and convexities having a symmetric shape are arrayed in a certain array pattern.

### Citation List

### Patent Literature

Patent Literature 1: JP 2014-066976A
Patent Literature 2: JP 2015-038579A
Patent Literature 3: JP 2015-060983A
Patent Literature 4: JP 2009-258751A

US 2014/063609 A1 discloses an optical body which has an anti-reflection function and can be produced without repeating sequential coating to stack a low refractive index layer and a high refractive index layer.

JP 2014 006390 A discloses an antireflection article, in which minute projections are arranged in close contact with one another, the interval between adjacent projections is equal to or shorter than the shortest wavelength of a wavelength band subjected to antireflection.

US 2012/087012 A1 discloses an optical film which has a moth eye structure; a method for producing the optical film; and a method for controlling the optical characteristics of the optical film.

US 2015/247954 A1 discloses a batch fabrication method of three-dimensional photonic microstructures including a support structure fabricating step, a variable structure fabricating step, a thermal reflow step, and a three-dimensional photonic microstructure forming step.

### Summary of Invention

### Technical Problem

However, with the technologies disclosed in Patent Literatures 1 to 4, the anti-reflection characteristics of the optical body remain inadequate. Note that as a method of raising the anti-reflection characteristics of the optical body, a method of overlapping convexities that form the concave-convex structure with each other is proposed, as disclosed in Patent Literature 4. According to this method, since the density of the concave-convex structure is improved, an improvement in the anti-reflection characteristics of the optical body is anticipated. However, in the case of applying this method to a concave-convex structure of the past, in order to realize the desired anti-reflection characteristics, it is necessary to greatly overlap the convexities. For this reason, there is another problem of degraded transferability of the concave-convex structure of the master.

In other words, the optical body is produced using a master as a transfer mold, in which the concave-convex structure is formed on the surface of the master. The concave-convex structure formed on the surface of the master has the inverse shape of the concave-convex structure formed on the surface of the optical body. With this method, an uncured resin layer is formed on a base material, and the concave-convex structure of the master is transferred to the uncured resin layer. After that, the uncured resin layer is cured. Subsequently, the master is separated from the uncured resin layer which has been cured, or in other words, the cured resin layer. The concave-convex structure of the master is thus transferred to the cured resin layer. By the above steps, the optical body is produced. Herein, in the case of greatly overlapping the convexities with each other, the concavities become extremely fine shapes. In other words, the floor area of the concavities becomes extremely small. Consequently, the convexities formed on the master become extremely fine shapes. For this reason, accurately transferring the concave-convex structure of the master to the uncured resin layer becomes extremely difficult. In other words, the transferability of the concave-convex structure of the master is degraded. Additionally, if the transferability is degraded, the concave-convex structure of the master is not reflected accurately in the optical body, and there is a possibility of degraded anti-reflection characteristics of the optical body.

Accordingly, the present invention has been devised in light of the above problems, and an objective of the present invention is to provide a novel and improved optical body, master, and method for manufacturing an optical body in which the anti-reflection characteristics are improved even further, and fabrication is facilitated.

### Solution to Problem

According to an aspect of the present invention in order to achieve the above object, there is provided an optical body as defined in claim 1.

Herein, a plan-view shape of the structures may have an asymmetric shape with respect to the one plane direction.

Also, in a case of dividing the plan-view shape of the structure into two regions by a line that bisects a quadrilateral circumscribing the structure along an array direction of the structures, each of the two regions may have a different area.

Also, an area ratio obtained by dividing the area of the smaller of the two regions by the area of the larger region may be 0.97 or less.

Also, the area ratio may be 0.95 or less.

Also, the area ratio may be 0.95 or less, and 0.33 or greater.

Also, a perpendicular cross-sectional shape of the structures may have an asymmetric shape with respect to the one plane direction.

Also, a position of an apex of the perpendicular cross-sectional shape of the structures may be displaced in a track direction of the structures with respect to a center point of the track direction.

Also, a displacement ratio, which is obtained by dividing a displacement of the position of the apex by a dot pitch of the structures, may be 0.03 or greater.

Also, the displacement ratio may be 0.03 or greater, and 0.5 or less.

Also, the structures may have convex shapes.

Also, the structures may have concave shapes.

Also, the structures may include a cured curing resin.

Also, adjacent structures may abut each other.

According to another aspect of the present invention, there is provided a master, on a surface of which is formed an inverse shape of the above concave-convex structure.

Herein, the master may be plate-like, hollow round cylindrical, or round columnar.

According to another aspect of the present invention, there is provided a method for manufacturing an optical body, including: forming the concave-convex structure on a base material by using the above master as a transfer mold.

According to the above aspects, the structures have an asymmetric shape with respect to any one plane direction perpendicular to the thickness direction of the optical body. Consequently, high anti-reflection characteristics are realized, without greatly overlapping the structures with each other. For this reason, the transferability of the concave-convex structure of the master is high, thereby also facilitating fabrication of the optical body.

### Advantageous Effects of Invention

According to the above aspects as described above, the anti-reflection characteristics are improved even further, and fabrication is facilitated.

### Brief Description of Drawings

[FIG 1] FIG. 1 is a plan view illustrating an exemplary appearance of an optical body according to an embodiment of the present invention.
[FIG 2] FIG. 2 is a CC cross-section diagram of the optical body according to the embodiment.
[FIG. 3] FIG. 3 is an explanatory diagram for explaining a method of computing the area ratio of a convexity.
[FIG. 4] FIG. 4 is a plan view illustrating a modification of the concave-convex structure.
[FIG. 5] FIG. 5 is a plan view illustrating a modification of the concave-convex structure.
[FIG. 6] FIG. 6 is a micrograph illustrating a modification of the concave-convex structure.
[FIG. 7] FIG. 7 is a lateral cross-section diagram illustrating a modification of the concave-convex structure.
[FIG. 8] FIG. 8 is a perspective diagram illustrating an exemplary appearance of a master according to the present embodiment.
[FIG 9] FIG. 9 is a block diagram illustrating an exemplary configuration of an exposure device.
[FIG. 10] FIG. 10 is a timing chart illustrating a conventional example of a pulse waveform of laser light.
[FIG. 11] FIG. 11 is a timing chart illustrating an example of a pulse waveform according to the present embodiment.
[FIG 12] FIG. 12 is a timing chart illustrating an example of a pulse waveform according to the present embodiment.
[FIG 13] FIG. 13 is a timing chart illustrating an example of a pulse waveform according to the present embodiment.
[FIG. 14] FIG. 14 is a timing chart illustrating an example of a pulse waveform according to the present embodiment.

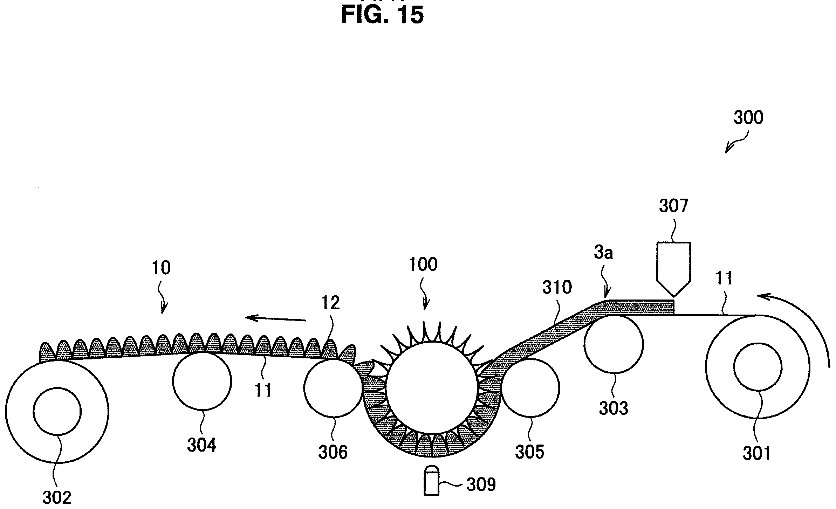

[FIG. 15] FIG. 15 is a schematic diagram illustrating an example of a transfer device that manufactures an optical body by roll-to-roll.
[FIG. 16] FIG. 16 is a graph illustrating the reflection spectrum of the optical body according to Example 1.
[FIG 17] FIG. 17 is a graph illustrating the reflection spectrum of the optical body according to Example 2.
[FIG. 18] FIG. 18 is a graph illustrating the reflection spectrum of the optical body according to Comparative Example 1.
[FIG. 19] FIG. 19 is a graph illustrating the reflection spectrum of the optical body according to Comparative Example 2.
[FIG. 20] FIG. 20 is a micrograph illustrating the appearance of the optical body according to Example 1.
[FIG 21] FIG. 21 is a micrograph illustrating the appearance of the optical body according to Example 3.
[FIG. 22] FIG. 22 is a micrograph illustrating the appearance of the optical body according to Comparative Example 1.
[FIG. 23] FIG. 23 is a graph illustrating the reflection spectra of the optical bodies according to Examples 1 and 3 and Comparative Example 1.
[FIG. 24] FIG. 24 is a graph illustrating the reflection spectrum of the optical body according to Example 4.
[FIG. 25] FIG. 25 is a graph illustrating the reflection spectrum of the optical body according to Example 5.
[FIG. 26] FIG. 26 is a schematic diagram for explaining a lower limit on the area ratio of the plan-view shape of a convexity.

### Description of Embodiments

Hereinafter, (a) preferred embodiment(s) of the present invention will be described in detail with reference to the appended drawings. In this specification and the appended drawings, structural elements that have substantially the same function and structure are denoted with the same reference numerals, and repeated explanation of these structural elements is omitted.

### <1. Configuration of optical body>

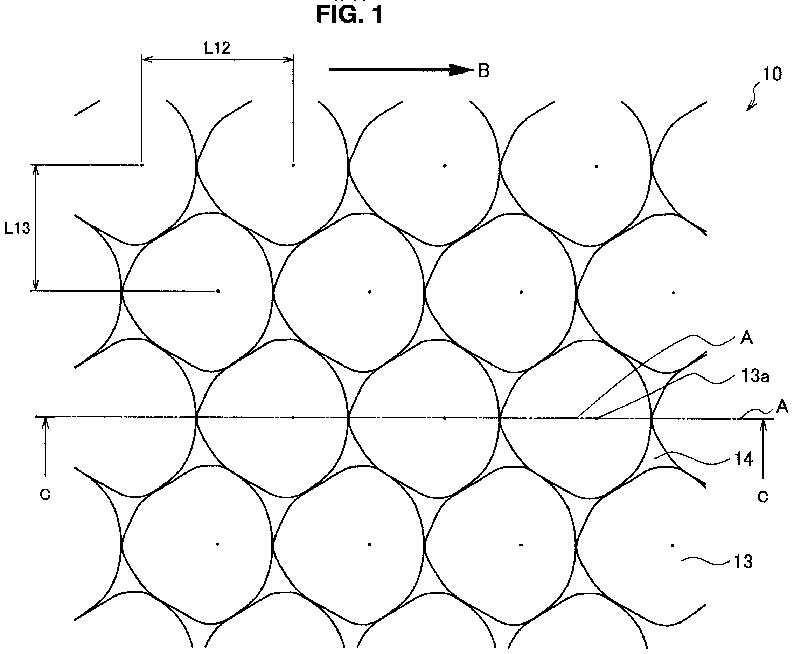

Next, the configuration of an optical body 10 will be described on the basis of FIGS. 1 to 3. The optical body 10 is provided with a base material 11, and a concave-convex structure 12 formed on one surface of the base material 11. Note that the base material 11 and the concave-convex structure 12 may also be integrated. For example, by making the base material 11 a thermoplastic resin film, the base material 11 and the concave-convex structure 12 can be integrated. Details will be described later.

The concave-convex structure 12 includes multiple convexities 13 (structures), which are convex in the film-thickness direction of the optical body 10, and multiple concavities 14 (structures), which are concave in the film-thickness direction of the optical body 10. The convexities 13 and the concavities 14 are arranged periodically on the optical body 10. For example, in the example of FIG. 1, the convexities 13 and the concavities 14 are arranged in a regular hexagonal lattice (in other words, a symmetric staggered lattice).

In other words, the concave-convex structure 12 may be considered to be a parallel array of tracks (rows) that include multiple convexities 13 and concavities 14. Note that although there is no particular limit on which direction in which the convexities 13 and concavities 14 are lined up is to be defined as the tracks, for example, in the case in which the optical body 10 is an elongated optical body (or an optical body obtained by cutting an elongated optical body), the convexities 13 and concavities 14 lined up in the lengthwise direction of the elongated optical body may be defined as the tracks. In the example of FIG. 1, tracks are defined in accordance with this method. Specifically, in the example of FIG. 1, the tracks extend in the direction of the arrow B (that is, the horizontal direction), and are lined up in the vertical direction. Also, the convexities 13 (or concavities 14) arranged between adjacent tracks are offset from each other in the lengthwise direction of the tracks (that is, the track direction) by half the length of the convexities 13 (or concavities 14).

Obviously, the convexities 13 and the concavities 14 may also be arranged in a different array pattern. For example, the convexities 13 and the concavities 14 may also be arranged in a different regular polygonal lattice (for example, a rectangular lattice). Additionally, the convexities 13 and the concavities 14 may also be arranged in a distorted polygonal lattice. Additionally, the convexities 13 and the concavities 14 may also be arranged randomly.

Also, the convexities 13 have an asymmetric shape with respect to any one plane direction perpendicular to the thickness direction of the optical body 10. In the example of FIG. 1, the convexities 13 have an asymmetric shape with respect to the direction of the arrow B. In other words, the convexities 13 have a shape obtained by distorting a symmetric shape in the direction of the arrow B. Hereinafter, the shape of the convexities 13 will be described in detail.

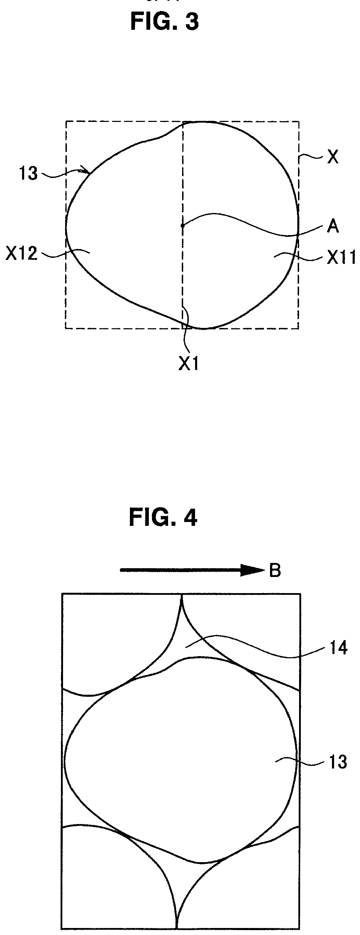

In the present embodiment, as illustrated in FIG. 3, the plan-view shape of a convexity 13 is asymmetric with respect to the direction of the arrow B. Herein, the plan-view shape of the convexity 13 is the shape obtained by projecting the convexity 13 onto the plane perpendicular to the thickness direction of the optical body 10 (that is, the shape illustrated in FIGS. 1 and 3).

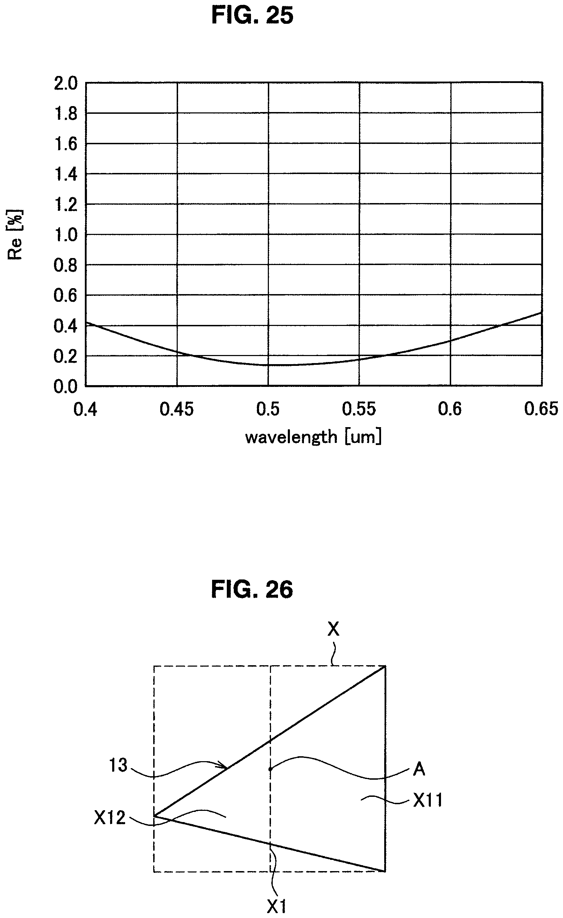

Additionally, draw a quadrilateral X circumscribing the plan-view shape of a convexity 13. Herein, the quadrilateral X means the smallest quadrilateral among quadrilaterals that enclose the plan-view shape of the convexity 13. Next, bisect the quadrilateral X by a line segment X1 perpendicular to the arrow B. Herein, the line segment X1 is the line segment that bisects the quadrilateral X along the array direction of the convexity 13. Next, define the midpoint A of the line segment X1 as the center point of the convexity 13 (that is, the center point of the convexity 13 in the track direction). The plan-view shape of the convexity 13 is divided by the line segment X1 into two regions X11 and X12. In addition, "the plan-view shape of the convexity 13 is asymmetric with respect to the direction of the arrow B" means that these regions X11 and X12 are asymmetric with respect to the line segment X1, or in other words, the areas of the regions X11 and X12 are different. Consequently, the plan-view shape of the convexity 13 is a shape obtained by distorting a shape that is symmetric with respect to the line segment X1 (for example, a perfect circle) in the direction of the arrow B. The area ratio of the region X11 and the region X12 is not particularly limited, but is preferably 0.97 or less, more preferably 0.95 or less, and more preferably 0.95 or less and 0.33 or greater. In the case in which the area ratio becomes 0.97 or less, the floor area described later can be increased. Also, in the case in which the plan-view shape of the convexity 13 takes a triangular shape (see FIG. 26) at the physical limit of asymmetry, the area ratio becomes 0.33. For this reason, the preferable range of the lower limit is taken to be 0.33. Herein, the area ratio of the region X11 and the region X12 is obtained by dividing the smaller area by the greater area from between the region X11 and the region X12. In this case, the anti-reflection characteristics of the optical body 10 are improved particularly. Note that in the case in which the plan-view shape of the convexity 13 is a perfect circle, the regions X11 and X12 become shapes which are symmetric with respect to the line segment X1. Note that a case in which the area ratio is different for every convexity 13 is also possible. In this case, the area ratios of several convexities 13 may be computed, and the arithmetic mean of these may be taken.

The plan-view shapes of the convexities 13 may be separated from each other, contacting each other (that is, adjacent convexities 13 may be abutting each other), or partially overlapping each other. In the example of FIG. 1, the plan-view shapes of the convexities 13 are contacting each other. From the perspective of raising the anti-reflection characteristics of the optical body 10, it is preferable for the plan-view shapes of the convexities 13 to be contacting each other or partially overlapping each other. However, if the plan-view shapes of the convexities 13 greatly overlap each other, the floor area of the concavities 14 becomes smaller, and thus there is a possibility of degraded transferability of a master 100. For this reason, the plan-view shapes of the convexities 13 may overlap each other to a degree that does not degrade the transferability of the master 100. Also, as a method of observing the plan-view shapes, scanning electron microscopy (SEM), cross-sectional transmission electronic microscopy (cross-sectional TEM) or the like may be used, for example. In the case in which observation of the boundaries of structures in plan view is difficult, it is also possible to perform cross-sectional processing on a plane at a height of approximately 5% with respect to the height of the structures, and observe the shapes corresponding to the floor surface.

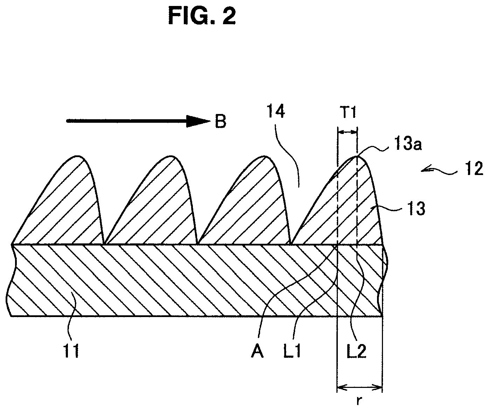

Furthermore, in the present embodiment, as illustrated in FIGS. 1 and 2, the CC cross-sectional shapes of the convexities 13 (that is, the perpendicular cross-sectional shapes) are asymmetric with respect to the direction of the arrow B. Herein, the CC cross-section means the cross-section that passes through the point A, and is parallel to direction of the arrow B and the thickness direction of the optical body 10.

Additionally, the apexes 13a of the convexities 13 are arranged on the CC cross-section. Additionally, the apexes 13a are arranged at positions that are shifted (displaced) from a line L1 that passes through the point A and is parallel to the thickness direction of the optical body 10. In other words, the positions of the apexes 13a of the perpendicular cross-sectional shapes of the convexities 13 are displaced in the track direction with respect to the center point A of the convexities 13 in the track direction. Specifically, a line L2 that passes through an apex 13a and is parallel to the thickness direction of the optical body 10 is distanced from the line L1 in the direction of the arrow B by a distance T1 (the displacement of the apex position). Consequently, "the perpendicular cross-sectional shapes of the convexities 13 are asymmetric with respect to the direction of the arrow B" means that the apexes 13a are arranged at positions shifted from the line L1 in the direction of the arrow B. Consequently, the perpendicular cross-sectional shapes of the convexities 13 are shapes obtained by distorting shapes that are symmetric with respect to the line L1 in the direction of the arrow B. Consequently, the convexities 13 may be considered to be inclined in the direction of the arrow B. The length of the distance T1 is not particularly limited, but is preferably equal to or greater than 2% of the radius r of a plan-view shape. Herein, the radius r of a plan-view shape means the distance from the point of intersection between the CC cross-section and the outer peripheral part of a convexity 13, to the center point. Also, the value obtained by dividing the distance L1 (nm) by the dot pitch (nm) of the structures, namely the displacement ratio (%), is preferably 0.03 or greater, more preferably 0.03 or greater and 0.5 or less, and more preferably 0.03 or greater and 0.1 or less. Note that in the case in which the convexities 13 and the concavities 14 are arranged randomly, the displacement ratio becomes the value obtained by dividing the distance L1 by the average cycle of the concave-convex structure 12. Also, in the case in which the distance L1 is different for every structure 12, it is sufficient to compute distances L1 for several structures 12, and take the arithmetic mean value of these as the distance L1.

Note that in the example illustrated in FIG 1, both the plan-view shapes and the perpendicular cross-sectional shapes of the convexities 13 are asymmetric with respect to the direction of the arrow B, but only one of these shapes may be asymmetric with respect to the direction of the arrow B. Also, the convexities 13 may be symmetric or asymmetric with respect to plane directions other than the direction of the arrow B, but are more preferably symmetric. This is to improve the transferability of the master 100.

On the other hand, the concavities 14 are arranged in between the convexities 13. In other words, the concavities 14 are formed by the outer peripheral surfaces of the convexities 13. Consequently, the shapes of the concavities 14 inevitably have features similar to the convexities 13. In other words, the plan-view shapes and the perpendicular cross-sectional shapes of the concavities 14 are asymmetric with respect to the direction of the arrow B. The plan-view shapes and the perpendicular cross-sectional shapes of the concavities 14 are defined similarly to the plan-view shapes and the perpendicular cross-sectional shapes of the convexities 13. Note that the plan-view shapes of the concavities 14 are the shapes of the open faces of the concavities 14, and the centers of gravity in the plan-view shapes of the concavities 14 correspond to the apexes 13a of the convexities 13.

In the present embodiment, since the convexities 13 and the concavities 14 have asymmetric shapes with respect to the direction of the arrow B, as disclosed in Examples described later, high anti-reflection characteristics can be realized without overlapping or greatly overlapping the convexities 13 with each other. For this reason, in the present embodiment, high anti-reflection characteristics can be realized without greatly overlapping the convexities 13 with each other. In other words, in the present embodiment, high anti-reflection characteristics can be obtained without greatly overlapping the convexities 13 with each other like in Patent Literature 4. Furthermore, in the present embodiment, the separability of the master 100 is improved. In other words, in the present embodiment, since the convexities 13 have asymmetric shapes with respect to the direction of the arrow B, by separating the master 100 away from the optical body 10 in the direction of the arrow B, the master 100 can be separated from the optical body 10 easily.

The shapes of the convexities 13 and the concavities 14 are not particularly limited insofar as the conditions described above are satisfied. The shapes of the convexities 13 and the concavities 14 may also be bullet-shaped, conical, columnar, or needle-shaped, for example.

Further, the average cycle (an average cycle of a structure) of the convexities 13 and the concavities 14 is less than or equal to the visible light wavelengths (for example, less than or equal to 830 nm), preferably more than or equal to 100 nm and less than or equal to 350 nm, more preferably more than or equal to 120 nm and less than or equal to 280 nm, and further more preferably more than or equal to 130 nm and less than or equal to 270 nm. Consequently, the concave-convex structure 12 has what is called a moth-eye structure. Herein, if the average cycle is less than 100 nm, there is a possibility that the formation of the concave-convex structure 12 may become difficult, which is not preferable. Also, if the average cycle exceeds 350 nm, there is a possibility that a diffraction phenomenon of visible light may occur, which is not preferable.

Herein, the average cycle of the convexities 13 and the concavities 14 is, for example, the arithmetic mean value of the distances between adjacent convexities 13 and concavities 14. Note that the concave-convex structure 12 is observable by scanning electron microscopy (SEM), cross-sectional transmission electron microscopy (cross-sectional TEM), or the like, for example. The average cycle of the convexities 13 is measured by the following method, for example. Namely, several combinations of adjacent convexities 13 are sampled. Next, the distances between the apexes of the convexities 13 are measured. Next, the arithmetic mean value of the measured values may be taken as the average cycle of the convexities 13. In addition, the average cycle of the concavities 14 is measured by the following method, for example. Namely, several combinations of adjacent concavities 14 are sampled. Next, the distances between the centers of gravity of the concavities 14 are measured. Next, the average cycle of the concavities 14 may be computed by taking the arithmetic mean of the measured values.

Note that in the case in which the convexities 13 and the concavities 14 are arrayed periodically on the optical body 10, the average cycle of the convexities 13 and the concavities 14 (that is, the average pitch) is categorized into a dot pitch L12 and a track pitch L13, for example. The dot pitch L12 is the average cycle between the convexities 13 (or concavities 14) arrayed in the track length direction. The track pitch L13 is the average cycle between the convexities 13 (or the concavities 14) arrayed in the track array direction (the vertical direction in FIG. 1). In the present embodiment, both the dot pitch L12 and the track pitch L13 are less than or equal to the visible light wavelengths. The dot pitch L12 and the track pitch L13 are different. The average cycle of the convexities 13 and the concavities 14 is the arithmetic mean value of the dot pitch L12 and the track pitch L13.

Also, the height of the convexities 13 (in other words, the depth of the concavities 14) is not particularly limited, and is preferably between 100 nm and 300 nm inclusive, more preferably between 130 nm and 300 nm inclusive, and even more preferably between 150 nm and 230 nm inclusive.

By having the average cycle and the height of the concave-convex structure 12 take values in the above ranges, the anti-reflection characteristics of the optical body 10 can be improved further. Specifically, the lower limit of the spectral reflectance (spectral specular reflectance for wavelengths from 350 nm to 800 nm) of the concave-convex structure 12 may be set approximately from 0.01% to 0.1%. Also, the upper limit may be set to 0.5% or less, preferably 0.4% or less, more preferably 0.3% or less, and even more preferably 0.2% or less. Also, in the case of forming the concave-convex structure 12 by a transfer method as described later, the optical body 10 can be separated from the master 100 easily after the transfer. Note that the height of the convexities 13 may also be different for every convexity 13.

The concave-convex structure 12 is made up of a cured curing resin, for example. The cured curing resin is preferably transparent. The curing resin includes a polymerizable compound and a curing initiator. The polymerizable compound is a resin that is cured by the curing initiator. The polymerizable compound may be a compound such as a polymerizable epoxy compound or a polymerizable acrylic compound, for example. A polymerizable epoxy compound is a monomer, oligomer, or prepolymer having one or multiple epoxy groups in the molecule. Examples of polymerizable epoxy compounds include various bisphenol epoxy resins (such as bisphenol A and F), novolac epoxy resin, various modified epoxy resins such as rubber and urethane, naphthalene epoxy resin, biphenyl epoxy resin, phenol novolac epoxy resin, stilbene epoxy resin, triphenol methane epoxy resin, dicyclopentadiene epoxy resin, triphenyl methane epoxy resin, and prepolymers of the above.

A polymerizable acrylic compound is a monomer, oligomer, or prepolymer having one or multiple acrylic groups in the molecule. Herein, monomers are further classified into monofunctional monomers having one acrylic group in the molecule, bifunctional monomers having two acrylic groups in the molecule, and multifunctional monomers having three or more acrylic groups in the molecule.

Examples of "monofunctional monomers" include carboxylic acids (acrylic acids), hydroxy monomers (2-hydroxyethyl acrylate, 2-hydroxypropyl acrylate, 4-hydroxybutyl acrylate), alkyl or alicyclic monomers (isobutyl acrylate, t-butyl acrylate, isooctyl acrylate, lauryl acrylate, stearyl acrylate, isobornyl acrylate, cyclohexyl acrylate), other functional monomers (2-methoxyethyl acrylate, methoxyethylene glycol acrylate, 2-ethoxyethyl acrylate, tetrahydrofurfuryl acrylate, benzyl acrylate, ethyl carbitol acrylate, phenoxyethyl acrylate, N,N-dimethylamino ethyl acrylate, N,N-dimethylamino propyl acrylamide, N,N-dimethyl acrylamide, acryloyl morpholine, N-isopropyl acrylamide, N,N-diethyl acrylamide, N-vinyl pyrrolidone, 2-(perfluorooctyl)ethyl acrylate, 3-perfluorohexyl-2-hydroxypropyl acrylate, 3 -perfluorooctyl-2-hydroxypropyl-acrylate, 2-(perfluorodecyl)ethyl-acrylate, 2-(perfluoro-3-methylbutyl)ethyl acrylate), 2,4,6-tribromophenol acrylate, 2,4,6-tribromophenol methacrylate, 2-(2,4,6-tribromophenoxy)ethyl acrylate), and 2-ethylhexyl acrylate.

Examples of "bifunctional monomers" include tri(propylene glycol) di-acrylate, trimethylolpropane-diaryl ether, and urethane acrylate.

Examples of "multifunctional monomers" include trimethylolpropane tri-acrylate, dipentaerythritol penta- and hexa-acrylate, and ditrimethylolpropane tetra-acylate.

Examples other than the polymerizable acrylic compounds listed above include acrylmorpholine, glycerol acrylate, polyether acrylates, N-vinylformamide, N-vinylcaprolactone, ethoxy diethylene glycol acrylate, methoxy triethylene glycol acrylate, polyethylene glycol acrylate, ethoxylated trimethylolpropane tri-acrylate, ethoxylated bisphenol A di-acrylate, aliphatic urethane oligomers, and polyester oligomers. From the perspective of transparency of the optical body 10, the polymerizable compound preferably is a polymerizable acrylic compound.

The curing initiator is a material that cures the curing resin. Examples of the curing initiator include thermal curing initiators and light-curing initiators, for example. The curing initiator may also be one that cures by some kind of energy beam other than heat or light (for example, an electron beam) or the like. In the case in which the curing initiator is a thermal curing initiator, the curing resin is a thermosetting resin, whereas in the case in which the curing initiator is a light-curing initiator, the curing resin is a light-curing resin.

Herein, from the perspective of transparency of the optical body 10, the curing initiator preferably is an ultraviolet-curing initiator. Consequently, the curing resin preferably is an ultraviolet-curing acrylic resin. An ultraviolet-curing initiator is a type of light-curing initiator. Examples of ultraviolet-curing initiators include 2,2-dimethoxy-1,2-diphenylethane-1-one, 1-hydroxy-cyclohexyl phenyl ketone, and 2-hydroxy-2-methyl-1-phenyl propane-1-one.

In addition, the resin that forms the concave-convex structure 12 may be a resin imparted with functionality such as hydrophilicity, water repellency, antifogging, and the like.

Additionally, additives may also be added to the concave-convex structure 12 depending on the purpose of the optical body 10. Examples of additives include inorganic fillers, organic fillers, leveling agents, surface conditioners, and antifoaming agents. Note that examples of types of inorganic fillers include metallic oxide particles such as SiO₂, TiO₂, ZrO₂, SnO₂, and Al₂O₃.

The type of the base material 11 is not particularly limited, but in the case of using the optical body 10 as an anti-reflection film, a transparent and tear-resistant film is preferable. Examples of the base material 11 include polyethylene terephthalate (PET) film and triacetyl cellulose (TAC) film. In the case of using the optical body 10 as an anti-reflection film, the base material 11 is preferably made of a highly transparent material. Also, it is sufficient to adjust the thickness of the base material 11 as appropriate according to the usage of the optical body 10, or in other words the handling properties demanded of the optical body 10. The base material 11 may be made of a silicon-based material. Also, the shape of the base material 11 is not limited to a film shape, and base materials of any of various shapes, such as plate-like, curved, and lens-shaped, may also be used. Also, for the material of the base material 11, an inorganic material, such as a glass material or an Al₂O₃-based material, for example, may be used. The base material 11 and the concave-convex structure 12 may be made of different materials or the same material. In the case in which the base material 11 and the concave-convex structure 12 are made of different materials, an index-matching layer or the like for adjusting the refractive index between the materials may also be formed. The thickness of the base material 11 may be from 50 µm to 125 µm, for example. The base material 11 may be plate-like or have another shape (for example, concave or convex). Also, at least one of the base material 11 and the concave-convex structure 12 may also be colored.

### <2. Modifications of concave-convex structure>

### (2-1. First modification)

Next, various modifications of the concave-convex structure will be described. FIG. 4 illustrates a first modification of the concave-convex structure 12. In the first modification, the plan-view shape of the convexities 13 is compressed somewhat in the vertical direction compared to the plain-view shape illustrated in FIG. 1. Even in the first modification, advantageous effects similar to the concave-convex structure 12 of FIG. 1 can be anticipated.

### (2-2. Second modification)

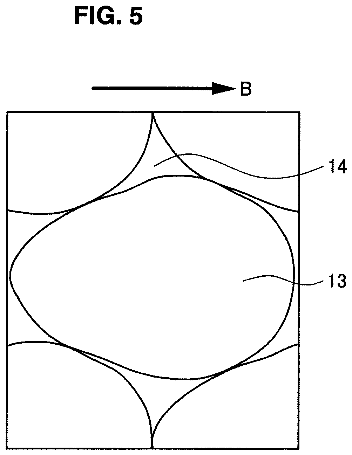

FIG. 5 illustrates a second modification of the concave-convex structure 12. In the second modification, the array pattern of the convexities 13 and the concavities 14 is a pattern shifted from a regular hexagonal lattice pattern. Specifically, in the second modification, the track pitch L3 is slightly narrower than the track pitch L3 illustrated in FIG. 1. Even in the second modification, advantageous effects similar to the concave-convex structure 12 of FIG. 1 can be anticipated.
Note that to obtain a concave-convex structure 12 like that of the second modification, it is sufficient to modify the track pitch and the dot pitch appropriately. For example, the track pitch may be set from 100 nm to 180 nm, and the dot pitch may be set from 180 nm to 270 nm.

### (2-3. Third modification)

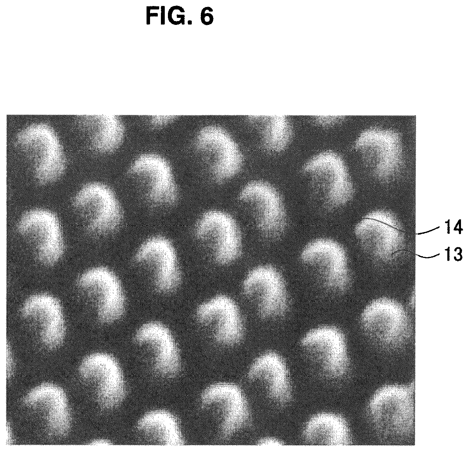

FIG. 6 illustrates a third modification of the concave-convex structure 12. In FIG. 6, the vertical direction is the track direction (corresponding to the direction of the arrow B). In the third modification, the convexities 13 have an asymmetric shape with respect to a different direction (herein, the upper-right direction) than the track direction. In other words, the plan-view shapes of the convexities 13 are asymmetric shapes with respect to the upper-right direction. For example, in the case of defining the regions X11 and X12 similarly to FIG. 3, the region X11 on the upper-right side is larger than the region X12 on the lower-left side. Also, the apexes 13a are shifted in the upper-right direction from the center point A. Even in the third modification, advantageous effects similar to the concave-convex structure 12 of FIG. 1 can be anticipated. Note that to obtain a concave-convex structure 12 as illustrated in FIG. 6, in an exposure device 200 described later, it is sufficient to provide an aperture with an asymmetric shape in front of an objective lens 223 in the optical path direction. The plan-view shape of the aperture approximately matches the plan-view shape of the convexities 13. By disposing such an aperture, the laser light condensed as a Fourier-transformed image by the objective lens 223 can be set to an asymmetric shape.

### (2-4. Fourth modification)

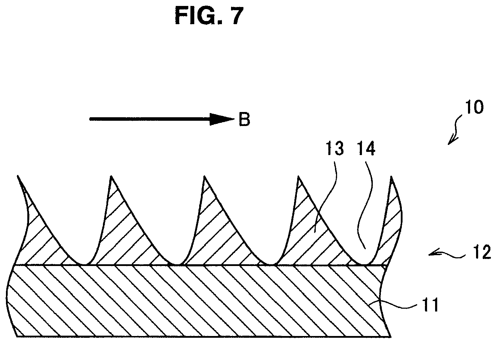

In the fourth modification, the concave-convex structure 12 has the inverse shape of the concave-convex structure 12 illustrated in FIG. 1. In other words, in the fourth modification, the convexities 13 of FIG. 1 are replaced with the concavities 14, while the concavities 14 of FIG. 1 are replaced with the convexities 13. FIG. 7 illustrates a CC cross-section diagram of the concave-convex structure 12 according to the fourth modification. Even in the fourth modification, advantageous effects similar to the concave-convex structure 12 of FIG. 1 can be anticipated. In this case, the plan-view shapes and the perpendicular cross-sectional shapes of the concavities 14 are asymmetric with respect to the direction of the arrow B. The plan-view shapes and the perpendicular cross-sectional shapes of the concavities 14 are defined similarly to the plan-view shapes and the perpendicular cross-sectional shapes of the convexities 13 illustrated in FIG. 1. Note that the plan-view shapes of the concavities 14 are the shapes of the open faces of the concavities 14, and the centers of gravity in the plan-view shapes of the concavities 14 correspond to the apexes 13a of the convexities 13 illustrated in FIG. 1.

### <3. Configuration of master>

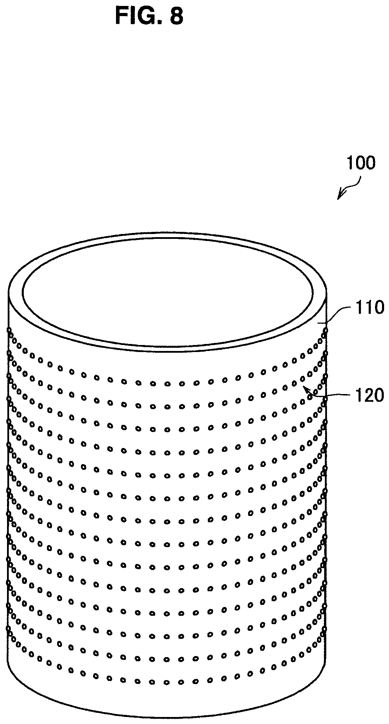

The concave-convex structure 12 is produced using the master 100 illustrated in FIG. 8, for example. Accordingly, the configuration of the master 100 will be described next. The master 100 is a master used in a nanoimprint method, and has a hollow round cylindrical shape, for example. The master 100 may also have a round columnar shape, or another shape (for example, a planar shape). However, if the master 100 has a round columnar or hollow round cylindrical shape, a concave-convex structure 120 of the master 100 (in other words, the master concave-convex structure) may be transferred seamlessly to a resin base material or the like with a roll-to-roll method. Consequently, the optical body 10 with the master concave-convex structure 120 of the master 100 transferred thereonto may be produced with high production efficiency. From such a perspective, the shape of the master 100 is preferably a hollow round cylindrical shape or a round columnar shape.

The master 100 is provided with a master base material 110, and the master concave-convex structure 120 formed on the circumferential surface of the master base material 110. The master base material 110 is a glass body, for example, and specifically is formed from quartz glass. However, the master base material 110 is not particularly limited insofar as the SiO₂ purity is high, and may also be formed from a material such as fused quartz glass or synthetic quartz glass. The master base material 110 may also be a laminate of the above materials on a metal matrix, or a metal matrix. The shape of the master base material 110 is a hollow round cylindrical shape, but may also be a round columnar shape, or some other shape. However, as described above, the master base material 110 preferably has a hollow round cylindrical shape or a round columnar shape. The master concave-convex structure 120 has the inverse shape of the concave-convex structure 12.

### <4. Method of manufacturing master>

Next, a method of manufacturing the master 100 will be described. First, a base material resist layer is formed (deposited) on the master base material 110. At this point, the resist constituting the base material resist layer is not particularly limited, and may be either an organic resist or an inorganic resist. Examples of organic resists include novolac-type resist and chemically-amplified resist. Also, examples of inorganic resists include metallic oxides including one or multiple types of transition metals such as tungsten (W) or molybdenum (Mo). However, in order to conduct thermal reaction lithography, the base material resist layer preferably is formed with a thermo-reactive resist including a metallic oxide.

In the case of using an organic resist, the base material resist layer may be formed on the master base material 110 by using a process such as spin coating, slit coating, dip coating, spray coating, or screen printing. Also, in the case of using an inorganic resist for the base material resist layer, the base material resist layer may be formed by sputtering.

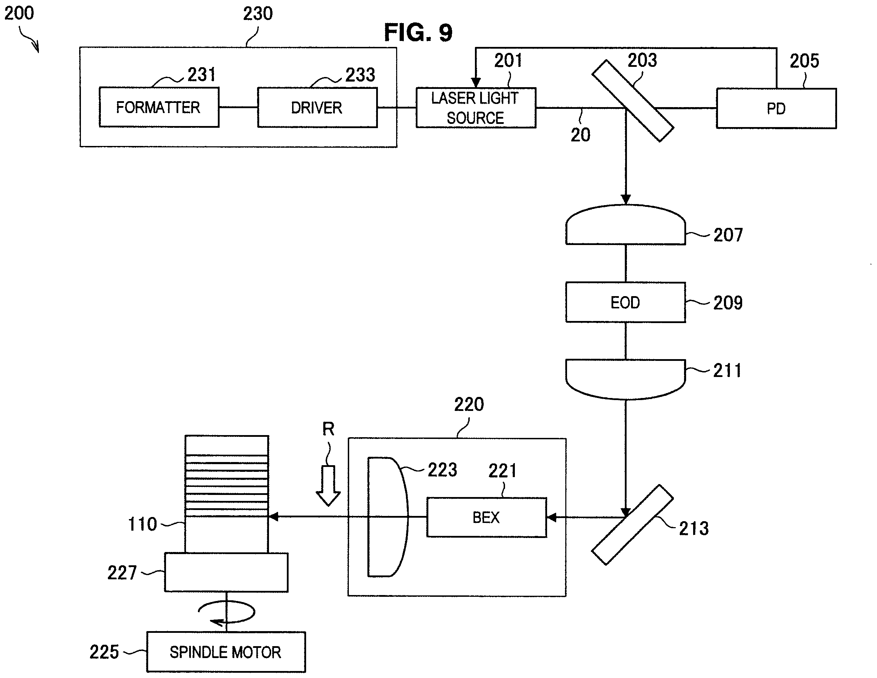

Next, by exposing part of the base material resist layer with an exposure device 200 (see FIG. 9), a latent image is formed on the base material resist layer. Specifically, the exposure device 200 modulates laser light 200A, and irradiates the base material resist layer with the laser light 200A. Consequently, part of the base material resist layer irradiated by the laser light 200A denatures, and thus a latent image corresponding to the master concave-convex structure 120 may be formed in the base material resist layer. The latent image is formed in the base material resist layer at an average cycle less than or equal to the visible light wavelengths.

Next, by dripping a developing solution onto the base material resist layer in which is formed the latent image, the base material resist layer is developed. As a result, a concave-convex structure is formed in the base material resist layer. Subsequently, by etching the master base material 110 and the base material resist layer using the base material resist layer as a mask, the master concave-convex structure 120 is formed on the master base material 110. Note that although the etching method is not particularly limited, dry etching that is vertically anisotropic is preferable. For example, reactive ion etching (RIE) is preferable. By the above steps, the master 100 is produced. Note that anodic porous alumina obtained by the anodic oxidation of aluminum may also be used as the master. Anodic porous alumina is disclosed in WO 2006/059686, for example. Additionally, the master 100 may also be produced by a stepper using a reticle mask with an asymmetric shape.

Herein, although details will be described later, in the present embodiment, the master concave-convex structure 120 is formed by adjusting the irradiation mode of the laser light 200A. With this arrangement, the shape of the master concave-convex structure 120 can be set to the inverse shape of the concave-convex structure 12. In other words, the shape of the master concave-convex structure 120 is an asymmetric shape with respect to any one plane direction of the master 100 (herein, the circumferential direction of the master 100).

### <5. Configuration of exposure device>

Next, the configuration of the exposure device 200 will be described on the basis of FIG. 9. The exposure device 200 is a device that exposes the base material resist layer. The exposure device 200 is provided with a laser light source 201, a first mirror 203, a photodiode (PD) 205, a deflecting optical system, a control mechanism 230, a second mirror 213, a movable optical table 220, a spindle motor 225, and a turntable 227. Also, the master base material 110 is placed on the turntable 227 and able to be rotated.

The laser light source 201 is a light source that emits laser light 200A, and is a device such as a solid-state laser or a semiconductor laser, for example. The wavelength of the laser light 200A emitted by the laser light source 201 is not particularly limited, but may be a wavelength in the blue light band from 400 nm to 500 nm, for example. Also, it is sufficient for the spot diameter of the laser light 200A (the diameter of the spot radiated onto the resist layer) to be smaller than the diameter of the open face of a concavity of the master concave-convex structure 120, such as approximately 200 nm, for example. The laser light 200A emitted from the laser light source 201 is controlled by the control mechanism 230.

The laser light 200A emitted from the laser light source 201 advances directly in a collimated beam, reflects off the first mirror 203, and is guided to the deflecting optical system.

The first mirror 203 is made up of a polarizing beam splitter, and has a function of reflecting one polarized component, and transmitting the other polarized component. The polarized component transmitted through the first mirror 203 is sensed by the photodiode 205 and photoelectrically converted. Also, the photodetection signal photoelectrically converted by the photodiode 205 is input into the laser light source 201, and the laser light source 201 conducts phase modulation of the laser light 200A on the basis of the input photodetection signal.

In addition, the deflecting optical system is provided with a condenser lens 207, an electro-optic deflector (EOD) 209, and a collimator lens 211.

In the deflecting optical system, the laser light 200A is condensed onto the electro-optic deflector 209 by the condenser lens 207. The electro-optic deflector 209 is an element capable of controlling the radiation position of the laser light 200A. With the electro-optic deflector 209, the exposure device 200 is also able to vary the radiation position of the laser light 200A guided onto the movable optical table 220 (what is called a Wobble mechanism). After the radiation position is adjusted by the electro-optic deflector 209, the laser light 200A is converted back into a collimated beam by the collimator lens 211. The laser light 200A exiting the deflecting optical system is reflected by the second mirror 213, and guided level with and parallel to the movable optical table 220.

The movable optical table 220 is provided with a beam expander (BEX) 221 and an objective lens 223. The laser light 200A guided to the movable optical table 220 is shaped into a desired beam shape by the beam expander 221, and then radiated via the objective lens 223 onto the base material resist layer formed on the master base material 110. In addition, the movable optical table 220 moves by one feed pitch (track pitch) in the direction of the arrow R (feed pitch direction) every time the master base material 110 undergoes one rotation. The master base material 110 is placed on the turntable 227. The spindle motor 225 causes the turntable 227 to rotate, thereby causing the master base material 110 to rotate. With this arrangement, the laser light 200A is made to scan over the base material resist layer. At this point, a latent image of the base material resist layer is formed along the scanning direction of the laser light 200A. Consequently, the track direction of the concave-convex structure 12 (that is, the direction of the arrow B) corresponds to the scanning direction of the laser light 200A.

In addition, the control mechanism 230 is provided with a formatter 231 and a driver 233, and controls the radiation of the laser light 200A. The formatter 231 generates a modulation signal that controls the radiation of the laser light 200A, and the driver 233 controls the laser light source 201 on the basis of the modulation signal generated by the formatter 231. As a result, the irradiation of the master base material 110 by the laser light 200A is controlled.

The formatter 231 generates a control signal for irradiating the base material resist layer with the laser light 200A, on the basis of an input image depicting an arbitrary pattern to draw on the base material resist layer. Specifically, first, the formatter 231 acquires an input image depicting an arbitrary pattern to draw on the base material resist layer. The input image is an image corresponding to a development of the outer circumferential surface of the base material resist layer, in which the outer circumferential surface of the base material resist layer is cut in the axial direction and expanded in a single plane. Next, the formatter 231 partitions the input image into sub-regions of a certain size (for example, partitions the input image into a lattice), and determines whether or not the draw pattern is included in each of the sub-regions. Subsequently, the formatter 231 generates a control signal to perform control to irradiate with the laser light 200A each sub-region determined to include the draw pattern. The control signal (that is, the exposure signal) preferably is synchronized with the rotation of the spindle motor 225, but does not have to be synchronized. In addition, the control signal and the rotation of the spindle motor 225 may also be resynchronized every time the master base material 110 performs one rotation. Furthermore, the driver 233 controls the output of the laser light source 201 on the basis of the control signal generated by the formatter 231. As a result, the irradiation of the base material resist layer by the laser light 200A is controlled. Note that the exposure device 200 may also perform a known exposure control process, such as focus servo and positional correction of the irradiation spot of the laser light 200A. The focus servo may use the wavelength of the laser light 200A, or use another wavelength for reference.

In addition, the laser light 200A radiated from the laser light source 201 may irradiate the base material resist layer after being split into multiple optical subsystems. In this case, multiple irradiation spots are formed on the base material resist layer. In this case, when the laser light 200A emitted from one optical system reaches the latent image formed by another optical system, exposure may be ended.

### <6. Example of irradiation mode of laser light>

In the present embodiment, the master concave-convex structure 120 is formed on the master base material 110 by adjusting the irradiation mode of laser light. One example of the laser irradiation mode is a pulse waveform of laser light. Accordingly, pulse waveforms of laser light will be described.

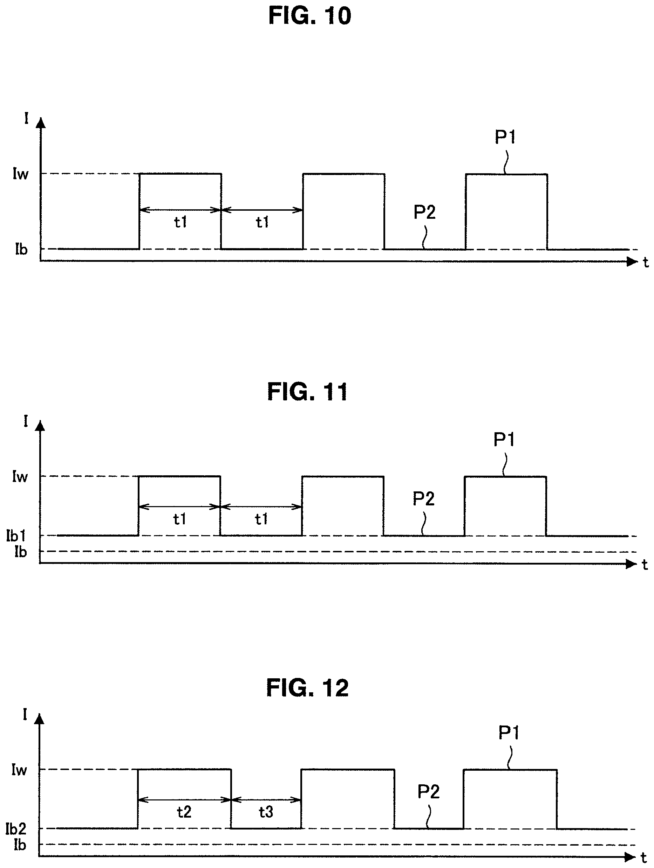

FIG. 10 illustrates a conventional example of a pulse waveform. The horizontal axis of FIG. 10 expresses time, while the vertical axis expresses the output level of laser light. In the example of FIG. 10, the exposure device 200 forms the master concave-convex structure 120 on the master base material 110 by alternately irradiating the master base material 110 with laser light of a high level (=Iw) and laser light of a low level (=Ib). Consequently, the pulse waveform of the laser light is divided into a high-output pulse P1, and a low-output pulse P2. The latent image is formed when the base material resist layer is irradiated with the high-level laser light, but the shape of the latent image is also affected by the low-level laser light. In this conventional example, the output level of the high-output pulse P1 is Iw, while the output level of the low-output pulse P2 is lb. Also, the output time of the high-output pulse P1 and the output time of the presentation power pulse P2 are both t1. The master concave-convex structure 120 formed by this conventional example has a symmetric shape with respect to all plane directions. Consequently, the plan-view shapes of the concave-convex structure 12 formed using the master 100 become perfect circles, for example. Also, the apexes 13a are arranged on the line L1 (see FIG. 2).

FIG 11 illustrates an example of a pulse waveform of the present embodiment. In this example, the output level Ib1 of the low-output pulse P2 is higher than the output level Ib of FIG. 10. The inventors discovered that by making the output level Ib1 of the low-output pulse P2 higher than the output level lb of FIG. 10, the shape of the master concave-convex structure 120 can be made asymmetric with respect to the scanning direction of the laser light 200A. In other words, the master concave-convex structure 120 has the inverse shape that is the inverse of the concavities and convexities of the concave-convex structure 12 illustrated in FIGS. 1 and 2. Also, the scanning direction of the laser light 200A is the opposite direction of the direction of the arrow B. The same applies to the examples in FIGS. 12 to 14 below. In this example, since the output level of the low-output pulse P2 varies, the change over time in the temperature of the base material resist layer changes. For this reason, it is thought that the shape of the master concave-convex structure 120 becomes asymmetric with respect to the scanning direction of the laser light 200A.

Also, if the output difference between the output level Ib1 and the output level Ib is decreased, the area ratio between the region X11 and the region X12 becomes larger. Also, the distance T1 between the line L2 and the line L1 (that is, the distance in the direction of the arrow B from the apex 13a of a convexity 13 to the center point A of the convexity 13; see FIG. 2) becomes larger. Note that the output difference between the output level Ib1 and the output level Ib is preferably equal to or greater than 30% of the output level lb. This is because, in this case, the area ratio between the region X11 and the region X12 can be set to a value inside the preferable range described above. In addition, the ratio between the output level Iw and the output level Ib is preferably one in which Ib is a smaller value than Iw:Ib=3:1. This is because, in this case, the concave-convex structure 12 can be set to an asymmetric shape with respect to the direction of the arrow B.

Note that in the example of FIG. 11, the output time of one cycle's worth of the high-output pulse P1 and the low-output pulse P2 is unchanged from the example of FIG. 10. For this reason, the average cycle of the master concave-convex structure 120 formed by the example of FIG. 11 nearly matches the average cycle of the master concave-convex structure 120 formed by the conventional example of FIG. 10. The average cycle (specifically, the dot pitch L2) of the concave-convex structure 12 varies according to the output time of one cycle's worth of the high-output pulse P1 and the low-output pulse P2. Consequently, it is sufficient to adjust the output time of one cycle's worth of the high-output pulse P1 and the low-output pulse P2 arbitrarily in accordance with the anti-reflection characteristics and the like demanded of the optical body 10. The same applies to the examples in FIGS. 12 to 14 below.

FIG 12 illustrates an example of a pulse waveform of the present embodiment. In this example, the output level Ib1 of the low-output pulse P2 is higher than the output level Ib of FIG. 10. Furthermore, the output time of the high-output pulse P1 is t2, which is longer than t1. On the other hand, the output time t3 of the low-output pulse P2 is shorter than t2. In this example, the output time t3 of the low-output pulse P2 is 2^{∗}t1-t2. The inventors discovered that by making the output time t2 of the high-output pulse P1 longer than the output time t3 of the low-output pulse, the shape of the master concave-convex structure 120 can be made asymmetric with respect to the scanning direction of the laser light 200A. In other words, the master concave-convex structure 120 has the inverse shape of the concave-convex structure 12 illustrated in FIGS. 1 and 2. In this example, since the output time of the high-output pulse P1 varies, the change over time in the temperature of the base material resist layer changes. For this reason, it is thought that the shape of the master concave-convex structure 120 becomes asymmetric with respect to the scanning direction of the laser light 200A. Note that in this example, the output level Ib1 of the low-output pulse P2 is higher than the output level Ib of FIG 10. Furthermore, the output time of the high-output pulse P1 is t2, which is longer than t1. For this reason, the degree of asymmetry is greater than the example of FIG. 11. Consequently, for example, the convexities 13 having the shape illustrated in FIG. 4 are formed.

Also, as the output time t2 of the high-output pulse P1 becomes longer, the area ratio between the region X11 and the region X12 becomes larger. Also, the distance T1 between the line L2 and the line L1 becomes larger. The relationship (t3/(t2+t3)) between the output time t2 and the output time t3 is preferably equal to or greater than 40%, and less than or equal to 90%. This is because, in this case, the concave-convex structure 12 can be set to an asymmetric shape with respect to the direction of the arrow B.

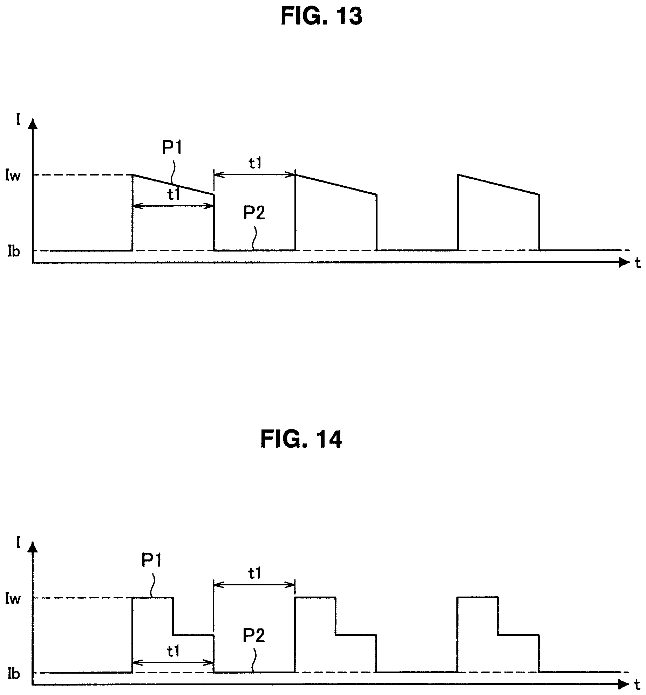

FIG. 13 illustrates an example of a pulse waveform of the present embodiment. In this example, the output level of the high-output pulse P1 falls linearly with the passage of time. The inventors discovered that by causing the output level of the high-output pulse P1 to fall linearly with the passage of time, the shape of the master concave-convex structure 120 can be made asymmetric with respect to the scanning direction of the laser light 200A. In other words, the master concave-convex structure 120 has the inverse shape of the concave-convex structure 12 illustrated in FIGS. 1 and 2. Even in this example, the change over time in the temperature of the base material resist layer changes. For this reason, it is thought that the shape of the master concave-convex structure 120 becomes asymmetric with respect to the scanning direction of the laser light 200A.

Also, as the slope of the output level of the high-output pulse P1 becomes smaller (that is, as the amount of decrease in the output level per unit time becomes larger), the area ratio between the region X11 and the region X12 becomes larger. Also, the distance T1 between the line L2 and the line L1 becomes larger. Note that the slope of the output level of the high-output pulse P1 is preferably less than or equal to 97% of Iw. This is because, in this case, the concave-convex structure 12 can be set to an asymmetric shape with respect to the direction of the arrow B. Also, the slope of the output level of the high-output pulse P1 furthermore is preferably equal to or greater than 50% of Iw. This is because, in this case, the area ratio between the region X11 and the region X12 can be set to a value inside the preferable range described above.

FIG. 14 illustrates an example of a pulse waveform of the present embodiment. In this example, the output level of the high-output pulse P1 falls in a stepwise manner with the passage of time. The inventors discovered that by causing the output level of the high-output pulse P1 to fall in a stepwise manner with the passage of time, the shape of the master concave-convex structure 120 can be made asymmetric with respect to the scanning direction of the laser light 200A. In other words, the master concave-convex structure 120 has the inverse shape of the concave-convex structure 12 illustrated in FIGS. 1 and 2. Even in this example, the change over time in the temperature of the base material resist layer changes. For this reason, it is thought that the shape of the master concave-convex structure 120 becomes asymmetric with respect to the scanning direction of the laser light 200A.

Also, as the difference between the maximum value and the minimum value of the high-output pulse P1 becomes larger, the area ratio between the region X11 and the region X12 becomes larger. Also, the distance T1 between the line L2 and the line L1 becomes larger. Note that the difference between the maximum value and the minimum value of the high-output pulse P1 is preferably less than or equal to 97% of Iw. This is because, in this case, the concave-convex structure 12 can be set to an asymmetric shape with respect to the direction of the arrow B. Also, the difference between the maximum value and the minimum value of the high-output pulse P1 furthermore is preferably equal to or greater than 50% of Iw. This is because, in this case, the area ratio between the region X11 and the region X12 can be set to a value inside the preferable range described above.

Also, the number of steps by which to lower the output level of the high-output pulse P1 is one step in the example of FIG. 14. Obviously, the number of steps by which to lower the output level of the high-output pulse P1 may also be another number of steps. For example, by increasing the number of steps, an advantageous effect of being able to make the shapes of the convexities 13 into smooth and easily transferable shapes can be anticipated.

Note that in the examples of FIGS. 13 and 14, a pulse output that falls over time is used, but a pulse whose output rises may also be used. In this case, advantageous effects similar to the examples of FIGS. 13 and 14 are obtained, but the direction of the asymmetry becomes nearly the reverse.

Note that another irradiation mode of the laser light 200A may be the shape of the laser spot that the laser light 200A forms on the base material resist layer. By setting the shape of the laser spot to an asymmetric shape with respect to a direction different from the scanning direction of the laser light 200A, the shape of the master concave-convex structure 120 can be set to an asymmetric shape with respect to a direction different from the scanning direction of the laser light 200A. In this case, it becomes possible to form the concave-convex structure 12 illustrated in FIG. 6, for example.

Also, it is sufficient to adjust the specific output levels of the high-output pulse P1 and the low-output pulse P2 appropriately according to the material of the base material resist layer, the wavelength of the laser light 200A, and the like. In other words, it is sufficient to adjust the output levels of the high-output pulse P1 and the low-output pulse P2 so that the master concave-convex structure 120 according to the present embodiment is formed on the master base material 110.

Also, when using a thermo-reactive resist as the base material resist layer, since the temperature distribution changes depending on power level of the irradiating pulse, asymmetric shapes can be produced. Also, when using a photoreactive resist as the base material resist layer, since the reaction spot shape of the resist changes depending on the light intensity, asymmetric shapes can be produced.

### <7. Method of manufacturing optical body using master>

Next, an example of a method of manufacturing the optical body 10 using the master 100 will be described with reference to FIG. 14. The optical body 10 can be manufactured by a roll-to-roll transfer device 300 using the master 100. In the transfer device 300 illustrated in FIG. 14, the optical body 10 is produced using a light-curing resin.

The transfer device 300 is provided with the master 100, a base material supply roll 301, a take-up roll 302, guide rolls 303 and 304, a nip roll 305, a separation roll 306, an applicator device 307, and a light source 309.

The base material supply roll 301 is a roll around which a long-length base material 11 is wound in a roll, while the take-up roll 302 is a roll that takes up the optical body 10. Also, the guide rolls 303 and 304 are rolls that transport the base material 11. The nip roll 305 is a roll that puts the base material 11 laminated with an uncured resin layer 310, or in other words a transfer film 3a, in close contact with the master 100. The separation roll 306 is a roll that separates the base material 11 formed with the concave-convex structure 12, or in other words the optical body 10, from the master 100.

The applicator device 307 is provided with an applicating means such as a coater, and applies an uncured light-curing resin composition to the base material 11, and forms the uncured resin layer 310. The applicator device 307 may be a device such as a gravure coater, a wire bar coater, or a die coater, for example. Also, the light source 309 is a light source that emits light of a wavelength able to cure the light-curing resin composition, and may be a device such as an ultraviolet lamp, for example.

In the transfer device 300, first, the base material 11 is sent continuously from the base material supply roll 301 via the guide roll 303. Note that partway through the delivery, the base material supply roll 301 may also be changed to a base material supply roll 301 of a separate lot. The uncured light-curing resin composition is applied by the applicator device 307 to the delivered base material 11, and the uncured resin layer 310 is laminated onto the base material 11. As a result, the transfer film 3a is prepared. The transfer film 3a is put into close contact with the master 100 by the nip roll 305. The light source 309 irradiates with light the uncured resin layer 310 put in close contact with the master 100, thereby curing the uncured resin layer 310. With this arrangement, the arrangement pattern of the master concave-convex structure 120 formed on the outer circumferential face of the master 100 is transferred to the uncured resin layer 310. In other words, the concave-convex structure 12 having the inverse shape of the master concave-convex structure 120 is formed on the base material 11. Next, the base material 11 in which the concave-convex structure 12 is formed, or in other words the optical body 10, is separated from the master 100 by the separation roll 306. Next, the optical body 10 is taken up by the take-up roll 302 via the guide roll 304. Note that the master 100 may be oriented vertically or oriented horizontally, and a mechanism that corrects the angle and eccentricity of the master 100 during rotation may also be provided separately. For example, an eccentric tilt mechanism may be provided in a chucking mechanism.

In this way, in the transfer device 300, the circumferential shape of the master 100 is transferred to the transfer film 3a while transporting the transfer film 3a roll-to-roll. With this arrangement, the optical body 10 is produced.

Note that in the case of producing the optical body 10 with a thermoplastic resin, the applicator device 307 and the light source 309 become unnecessary. Also, the base material 11 is taken to be a thermoplastic resin film, and a heater device is disposed farther upstream than the master 100. The base material 11 is heated and softened by the heater device, and after that, the base material 11 is pressed against the master 100. With this arrangement, the master concave-convex structure 120 formed on the circumferential surface of the master 100 is transferred to the base material 11. Note that the base material 11 may also be taken to be a film made up of a resin other than a thermoplastic resin, and the base material 11 and a thermoplastic resin film may be laminated. In this case, the laminated film is pressed against the master 100 after being heated by the heater device. Consequently, the transfer device 300 is able to continuously produce a transfer product to which the master concave-convex structure 120 formed on the master 100 has been transferred, or in other words, the optical body 10.

In addition, a transfer film to which the master concave-convex structure 120 of the master 100 has been transferred may be produced, and the transfer film may be used as a transfer mold to produce the optical body 10. Also, the master 100 may be duplicated by electroforming, thermal transfer, or the like, and the duplicate may be used as a transfer mold. Furthermore, the shape of the master 100 is not necessarily limited to a roll shape, and may also be a planar master. Besides a method of irradiating resist with the laser light 200A, various processing methods can be selected, such as semiconductor exposure using a mask, electron beam lithography, machining, or anodic oxidation.

In addition, when separating the optical body 10 from the master 100, separation in the direction of the asymmetry of the convexities 13 (in the example of FIG. 1, the direction of the arrow B) is preferable. In this case, since the inclination direction of the convexities 13 and the separation direction of the optical body 10 match, the optical body 10 can be separated from the master 100 more easily. Also, the master concave-convex structure 120 of the master 100 can be transferred to the optical body 10 more surely. Obviously, in the present embodiment, since the floor area of the concavities 14 is also sufficiently broad, the optical body 10 may also be separated in another direction. Even in this case, the optical body 10 can be separated from the master 100 easily. Also, the master concave-convex structure 120 of the master 100 can be transferred to the optical body 10 more surely.

### [Examples]

### <1. Example 1>

### (1-1. Production of optical body)

In Example 1, the master 100 was produced by the following steps. A plate-like master base material 110 made of thermally oxidized silicon was prepared. Next, by spin-coating a positive resist material on the master base material 110, the base material resist layer was formed on the master base material 110. Herein, a metallic oxide resist including tungsten (W) was used as the resist material.

Next, the exposure device 200 was used to form a latent image of a regular hexagonal lattice in the base material resist layer. Herein, the wavelength of the laser light 200A was 405 nm, and the NA of the objective lens 223 was 0.85. Also, the pulse waveform of the laser light 200A was the one illustrated in FIG. 11. Also, the output level Iw of the high-output pulse P1 was 9.5 MW/cm² (the output level per unit area of the base material resist layer), and the output level Ib1 of the low-output pulse P2 was 1.6 MW/cm². Also, the output time t1 of the high-output pulse P1 and the low-output pulse P2 was 20 ns.

Next, by dripping developer onto the base material resist layer, the latent image was removed. In other words, a development process was performed. Next, dry etching was performed using the base material resist layer as a mask. With this arrangement, the master concave-convex structure 120 was formed on the master base material 110. For the etching gas, CHF₃ was used. Next, the master concave-convex structure 120 was coated with a fluorine-based release agent.

Next, the optical body 10 was produced using the master 100 as a transfer mold. Specifically, a polyethylene terephthalate film was prepared as the base material 11, and an uncured resin layer made of acrylic resin acrylate was formed on the base material 11. Next, the master concave-convex structure 120 of the master 100 was transferred to the uncured resin layer. Next, the uncured resin layer was cured by irradiating the uncured resin layer with ultraviolet rays at 1000 mJ/cm². Next, the optical body 10 was separated from the master 100 in the direction of the arrow B (that is, the track direction). By the above steps, the optical body 10 was produced.

### (1-2. Characteristics evaluation)

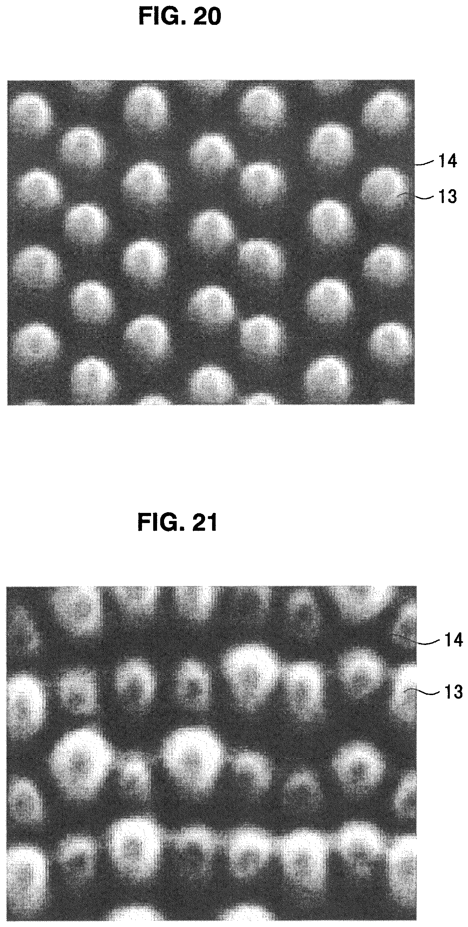

The surface structure of the optical body 10 was confirmed with SEM and TEM. A SEM photograph is illustrated in FIG. 20. As FIG 20 demonstrates, the formation of the concave-convex structure 12 on the surface of the optical body 10 was confirmed. Also, almost no gaps in the concave-convex structure 12 were confirmed. Consequently, the transferability of the master 100 was confirmed to be favorable. As described later, the reasons for this are thought to be because the floor ratio is large, and the convexities 13 have an asymmetric shape in the direction of the arrow B. Also, the dot pitch was 250 nm, and the track pitch was 200 nm.

Also, the convexities 13 had asymmetric shapes in the direction of the arrow B. Specifically, the area ratio between the region X11 and the region X12 was 0.95. Also, the height of the convexities 13 was 180 nm. Also, although the convexities 13 were adjacent to each other, there was little to no overlap.

Next, the spectral reflection spectrum of the optical body 10 was calculated by simulation. The RCWA method was used as the simulation technique. Also, the area ratio of the asymmetry was 0.95. Also, other parameters used in the simulation were as follows.
Structure arrangement: hexagonal lattice
Polarization: unpolarized
Refractive index: 1.52
Lattice spacing (dot pitch): 250 nm
Structure height (height of convexities): 180 nm

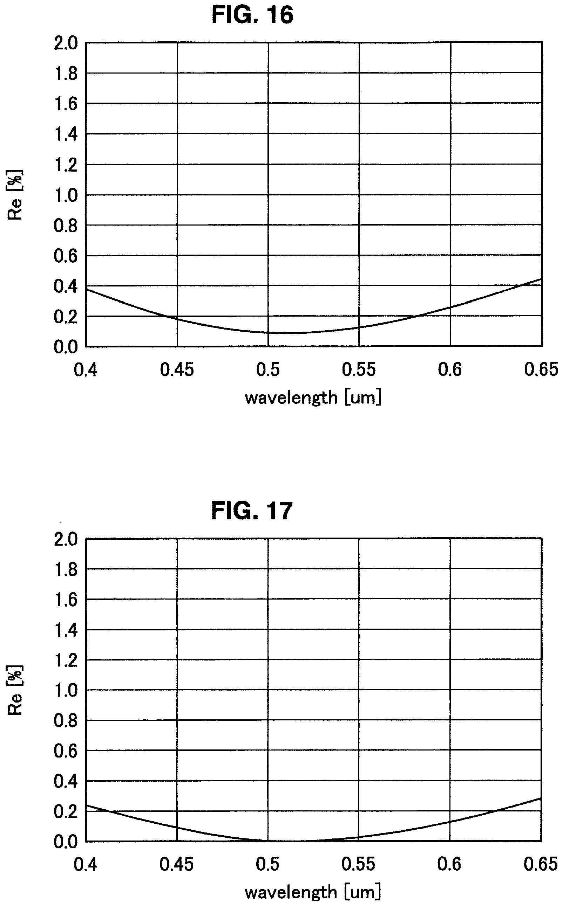

The results are illustrated in FIG. 16. The horizontal axis of FIG. 16 expresses the wavelength of incident light, while the vertical axis expresses the spectral reflectance of the optical body 10. As a result, the spectral reflectance with respect to the wavelengths from 400 nm to 650 nm was confirmed to be approximately from 0.1% to 0.45%. Also, the spectral reflectance with respect to the wavelength of 550 nm was 0.15%. Consequently, the optical body 10 was confirmed to have high anti-reflection characteristics with respect to a wide wavelength band.

Also, the floor ratio was measured using commercial data analysis software (Wolfram Mathematica; the same applies hereinafter). The floor ratio is the ratio of the floor area of all concavities 14 with respect to the total area of the surface of the base material 11 (that is, the surface on which the concave-convex structure 12 is formed). As a result, the floor ratio was the relatively large value of 8.0%.

In this way, in Example 1, high anti-reflection characteristics were obtained, even though the convexities 13 do not overlap each other (that is, the floor ratio is relatively large). The inventors think that such anti-reflection characteristics were obtained because the convexities 13 have asymmetric shapes with respect to the direction of the arrow B.

### <2. Example 2>

### (2-1. Production of optical body)

Other than changing the conditions when producing the optical body 10 as follows, the optical body 10 was produced by performing a process similar to Example 1. Specifically, the pulse waveform of the laser light 200A was the one illustrated in FIG. 12. Also, the output level Iw of the high-output pulse P1 was 9.5 MW/cm², and the output level Ib1 of the low-output pulse P2 was 1.6 MW/cm². Also, the output time t2 of the high-output pulse P1 was 24 ns, and the output time t3 of the low-output pulse P2 was 2^{∗}t1-t2=16 ns.

### (2-2. Characteristics evaluation)

The surface structure of the optical body 10 was confirmed with SEM and TEM. As a result, the formation of the concave-convex structure 12 on the surface of the optical body 10 was confirmed. Also, almost no gaps in the concave-convex structure 12 were confirmed. Consequently, the transferability of the master 100 was confirmed to be favorable. Also, the dot pitch was 250 nm, and the track pitch was 200 nm.

Also, the convexities 13 had asymmetric shapes in the direction of the arrow B. Specifically, the area ratio between the region X11 and the region X12 was 0.83, and the distance T1 was 20 nm. Also, the height of the convexities 13 was 180 nm. Also, although the convexities 13 were adjacent to each other, there was little to no overlap.

Next, by a method similar to Example 1, the spectral reflection spectrum of the optical body 10 was calculated. The results are illustrated in FIG. 17. As a result, the spectral reflectance with respect to the wavelengths from 400 nm to 650 nm was confirmed to be approximately from 0.01% to 0.3%. Also, the spectral reflectance with respect to the wavelength of 550 nm was 0.02%.

Also, when the floor ratio was measured using the commercial data analysis software, the floor ratio was 9.7%, which is a larger value than Example 1.

Consequently, the optical body 10 was confirmed to have high anti-reflection characteristics with respect to a wide wavelength band. Also, high anti-reflection characteristics were obtained, even though the floor ratio was higher than Example 1. The reason for this is thought to be because the area ratio of Example 2 is a value inside the preferable range.

### <3. Comparative Example 1>

### (3-1. Production of optical body)

Other than changing the conditions when producing the optical body as follows, the optical body was produced by performing a process similar to Example 1. Specifically, the pulse waveform of the laser light 200A was the one illustrated in FIG. 10. Also, the output level Iw of the high-output pulse P1 was 9.5 MW/cm², and the output level Ib of the low-output pulse P2 was 1.1 MW/cm² (0.35 mW). Also, the output time t1 of the high-output pulse P1 and the low-output pulse P2 was 20 ns.

### (3-2. Characteristics evaluation)

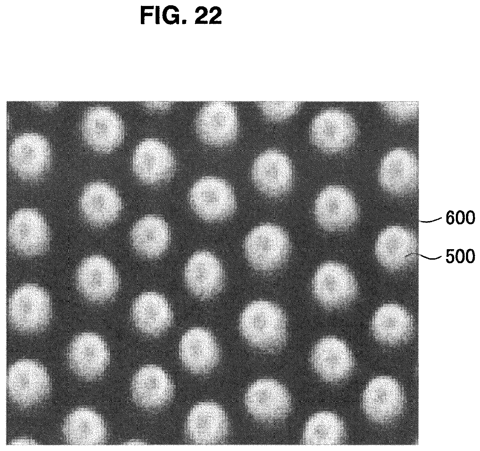

The surface structure of the optical body was confirmed with SEM and TEM. A SEM photograph is illustrated in FIG. 22. As FIG. 22 demonstrates, the formation of a concave-convex structure (convexities 500, concavities 600) on the surface of the optical body was confirmed. Also, almost no gaps in the concave-convex structure were confirmed. Consequently, the transferability of the master was confirmed to be favorable. Also, the dot pitch was 250 nm.

Also, the convexities 500 were symmetric with respect to all plane directions. Specifically, the plan-view shapes of the convexities 500 were perfect circles (that is, the area ratio was nearly 1.0), and the distance T1 was nearly zero. Also, the height of the convexities was 180 nm. Also, although the convexities 500 were adjacent to each other, there was little to no overlap.

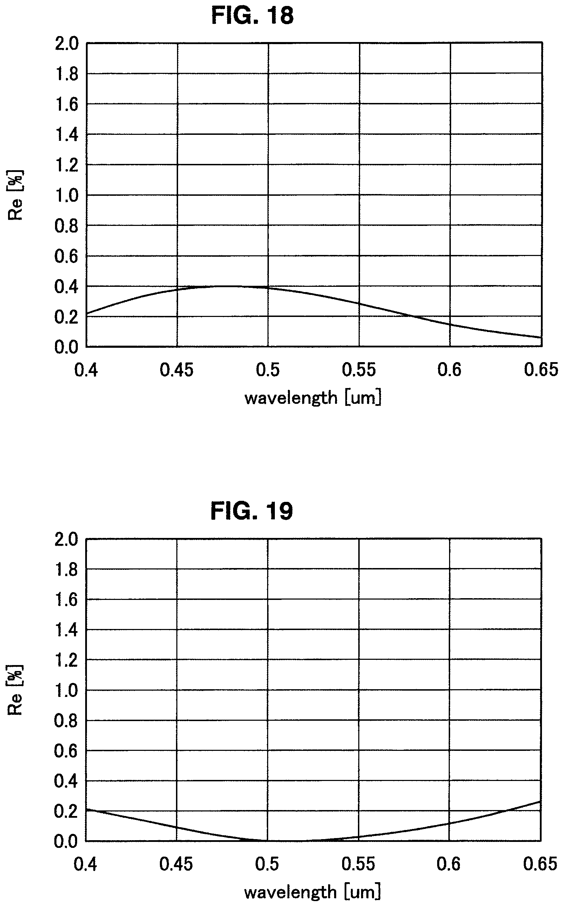

Next, by a method similar to Example 1, the spectral reflection spectrum of the optical body was calculated. The results are illustrated in FIG. 18. As a result, the spectral reflectance with respect to the wavelengths from 400 nm to 650 nm was confirmed to be approximately from 0.1% to 0.55%. Furthermore, the spectral reflectance was particularly high in the wavelength band from 450 nm to 550 nm. Also, the spectral reflectance with respect to the wavelength of 550 nm was 0.29%.

Also, when the floor ratio was measured using the commercial data analysis software, the floor ratio was 10%.

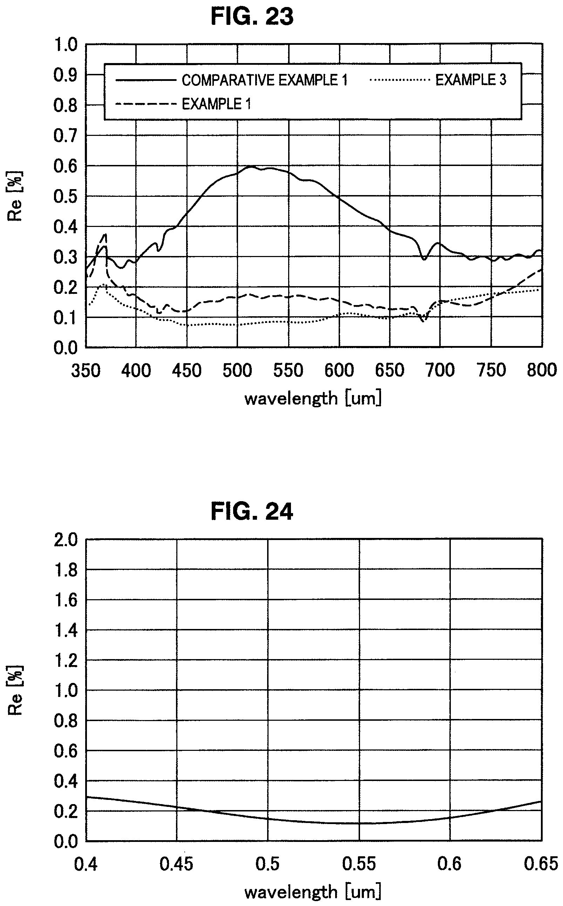

Consequently, the spectral reflectance of the optical body was higher overall than Example 1. Furthermore, the spectral reflectance was particularly high in the wavelength band from 450 nm to 550 nm. This is thought to be because, in Comparative Example 1, since the floor ratio is large, reflections of incident light occur on the floor of the concavities 14. Also, in the actual measurement, the spectral reflectance was higher than the values illustrated in FIG. 18 due to gaps in the concave-convex structure and the like (see FIG. 23).

### <4. Comparative Example 2>

### (4-1. Production of optical body)

Other than setting the output level Iw of the high-output pulse P1 to 11.0 MW/cm², the optical body was produced by performing a process similar to Comparative Example 1.

### (4-2. Characteristics evaluation)

The surface structure of the optical body was confirmed with SEM and TEM. As a result, the formation of the concave-convex structure on the surface of the optical body was confirmed. However, the convexities greatly overlapped each other, and gaps in the concave-convex structure were observed sporadically. Also, the dot pitch was 250 nm.

Also, the convexities were symmetric with respect to all plane directions. Specifically, the plan-view shapes of the convexities were perfect circles (that is, the area ratio was nearly 1.0), and the distance T1 was nearly zero. Also, the height of the convexities was 180 nm. Next, by a method similar to Example 1, the spectral reflection spectrum of the optical body was calculated. The results are illustrated in FIG 19. As a result, the spectral reflectance with respect to the wavelengths from 400 nm to 650 nm was confirmed to be approximately from 0.01% to 0.3%. Also, the spectral reflectance with respect to the wavelength of 550 nm was 0.02%. However, the spectral reflectance is merely a simulation result. As described above, in Comparative Example 2, gaps in the concave-convex structure were observed sporadically. Consequently, the actual spectral reflectance is anticipated to be higher than in FIG. 19.

Also, when the floor ratio was measured using the commercial data analysis software, the floor ratio was 5.5%, which is an extremely small value. In Comparative Example 2, the floor ratio was small because the convexities greatly overlap each other. For this reason, in the simulation, the spectral reflectance exhibited favorable values. However, when the concave-convex structure was actually observed, gaps in the concave-convex structure were observed sporadically, and thus the actual spectral reflectance is anticipated to be higher than in FIG. 19. In other words, in the case in which the convexities 13 greatly overlap each other like in Patent Literature 4, the spectral reflectance is anticipated to fall due to gaps in the concave-convex structure.

### <5. Example 3>

### (5-1. Production of optical body)

Other than performing the exposure while randomly changing the output time t2 of the high-output pulse P1 between 22 ns and 25 ns, the optical body 10 was produced by performing a process similar to Example 2.

### (5-2. Characteristics evaluation)

The surface structure of the optical body 10 was confirmed with SEM and TEM. A SEM photograph is illustrated in FIG. 21. As a result, the formation of the concave-convex structure 12 on the surface of the optical body 10 was confirmed. Also, almost no gaps in the concave-convex structure 12 were confirmed. Consequently, the transferability of the master 100 was confirmed to be favorable. Also, in Example 4, the concavities and convexities are arranged randomly. Accordingly, several combinations of adjacent convexities 13 were sampled, and the arithmetic mean value of the pitch of these was computed as the average cycle. As a result, the average cycle was 250 nm.

Also, the convexities 13 had asymmetric shapes in the direction of the arrow B (the vertical direction in FIG. 21). Specifically, the area ratio between the region X11 and the region X12 was 0.83, and the distance T1 was 25 nm. Also, the height of the convexities 13 was 180 nm. Also, there was little to no overlap between the convexities 13.

Next, the spectral reflection spectrum of the optical body 10 was measured. For the measurement, the JASCO V-550 was used. The results are illustrated in FIG. 23. In FIG. 23, the measurement data of Example 1 and Comparative Example 1 are also illustrated for comparison. As a result, the spectral reflectance with respect to the wavelengths from 350 nm to 800 nm of Example 3 was confirmed to be approximately from 0.08% to 0.2%. Also, the spectral reflectance with respect to the wavelength of 550 nm was 0.09%. Consequently, the optical body 10 was confirmed to have high anti-reflection characteristics with respect to a wide wavelength band. Also, the spectral reflectance of Example 1 was confirmed to be generally 0.2% or less, but in Example 3, higher anti-reflection characteristics than Example 1 were obtained. The reason for this is thought to be because the convexities 13 are arranged randomly.

Also, when the floor ratio was measured using the commercial data analysis software, the floor ratio was 10%.

### <6. Example 4>

### (6-1. Production of optical body)

A transfer film was produced, on which the master concave-convex structure 120 of the master 100 produced in Example 1 was transferred. Additionally, other than using the transfer film in place of the master 100, the optical body 10 was produced by performing a process similar to Example 1.

### (6-2. Characteristics evaluation)

The surface structure of the optical body 10 was confirmed with SEM and TEM. As a result, the formation of the concave-convex structure 12 on the surface of the optical body 10 was confirmed. The CC cross-section of the concave-convex structure 12 had the shape illustrated in FIG. 7. Also, almost no gaps in the concave-convex structure 12 were confirmed. Consequently, the transferability of the master 100 was confirmed to be favorable. Also, the dot pitch was 250 nm, and the track pitch was 200 nm.

Also, the concavities 14 had asymmetric shapes in the direction of the arrow B. Specifically, the area ratio between the region X11 and the region X12 was 0.9, and the distance T1 was 15 nm. Also, the depth of the concavities 14 was 180 nm. Also, there was little to no overlap between the concavities 14.

Next, by a method similar to Example 1, the spectral reflection spectrum of the optical body 10 was calculated. The results are illustrated in FIG. 24. As a result, the spectral reflectance with respect to the wavelengths from 400 nm to 650 nm was confirmed to be approximately from 0.05% to 0.3%. Also, the spectral reflectance with respect to the wavelength of 550 nm was 0.10%. Consequently, the optical body 10 was confirmed to have high anti-reflection characteristics with respect to a wide wavelength band.

Also, when the floor ratio in plan view was measured using the commercial data analysis software, the floor ratio was 9.8%. Note that the floor herein refers to the floor of the transfer film used in place of the master, which becomes the top (upper end) of the convexities 13 in the obtained optical body 10.

### <7. Example 5>

### (7-1. Production of optical body)

Other than changing the conditions when producing the optical body 10 as follows, the optical body 10 was produced by performing a process similar to Example 1. Specifically, the master concave-convex structure 120 was coated with an inorganic release agent.

### (7-2. Characteristics evaluation)

The surface structure of the optical body 10 was confirmed with SEM and TEM. As a result, the formation of the concave-convex structure 12 on the surface of the optical body 10 was confirmed. Also, almost no gaps in the concave-convex structure 12 were confirmed. Consequently, the transferability of the master 100 was confirmed to be favorable. Also, the dot pitch was 250 nm, and the track pitch was 200 nm.

Also, the convexities 13 had asymmetric shapes in the direction of the arrow B. Specifically, the area ratio between the region X11 and the region X12 was 0.97. Also, the height of the convexities 13 was 180 nm, and the distance T1 was 8 nm. Also, although the convexities 13 were adjacent to each other, there was little to no overlap. The change in the area ratio from Example 1 is thought to be because the state of the coating of the release agent changed.

Next, by a method similar to Example 1, the spectral reflection spectrum of the optical body 10 was calculated. The results are illustrated in FIG. 25. As a result, the spectral reflectance with respect to the wavelengths from 400 nm to 650 nm was confirmed to be approximately from 0.15% to 0.5%. Also, the spectral reflectance with respect to the wavelength of 550 nm was 0.17%.

Also, when the floor ratio was measured using the commercial data analysis software, the floor ratio was 8.0%, which is the same value in the error range as Example 1. The results are summarized in Table 1. Note that in Table 1, the values of the 550 nm reflectance for Examples 1, 2, 4, and 5 and Comparative Examples 1 and 2 are simulation values, whereas the value of the 550 nm reflectance for Example 3 is a measured value. In addition, Table 1 also illustrates the displacement ratio. Consequently, the optical bodies 10 according to Examples were confirmed to have high anti-reflection characteristics with respect to a wide wavelength band.

### [Table 1]

**(Table 1) Results comparison**

| | Example 1 | Example 2 | Example 3 | Example 4 | Example 5 | Comparative Example 1 | Comparative Example 2 |
|---|---|---|---|---|---|---|---|
| Area ratio | 0.95 | 0.83 | 0.83 | 0.9 | 0.97 | 1.0 | 1.0 |
| 550 nm reflectance (%) | 0.15 | 0.02 | 0.09 | 0.10 | 0.17 | 0.29 | 0.02 |
| Floor ratio (%) | 8.0 | 9.7 | 10 | 9.8 | 8.0 | 10 | 5.5 |
| Displacement ratio (%) | - | 8 | 10 | 6 | 3.2 | 0 | 0 |

The preferred embodiment(s) of the present invention has/have been described above with reference to the accompanying drawings, whilst the present invention is not limited to the above examples. A person skilled in the art may find various alterations and modifications within the scope of the appended claims, and it should be understood that they will naturally come under the technical scope of the present invention.

### Reference Signs List

- 10: optical body
- 11: base material
- 12: concave-convex structure
- 13: convexity
- 13a: apex
- 14: concavity
- 100: master
- 110: master base material
- 120: master concave-convex structure

## Claims

1. An optical body (10) having a concave-convex structure (12) in which structures (13, 14) having convex shapes or concave shapes are arrayed on an average cycle less than or equal to visible light wavelengths, wherein
the structures (13, 14) have an asymmetric shape with respect to any one plane direction perpendicular to a thickness direction of the optical body (10),
**characterized in that**
an array pitch of the structures (13, 14) in the one plane direction is different from an array pitch of the concave-convex structure (12) in another plane direction,
the optical body (10) is elongate,
the concave-convex structure (12) is a parallel array of tracks that include the structures (13, 14) lined up in the lengthwise direction of the optical body (10),
the structures (13, 14) are arrayed periodically on the optical body (10), and
a dot pitch (L12) which is an average cycle between the structures (13, 14) arrayed in a track length direction and a track pitch (L13) which is an average cycle between the structures (13, 14) arrayed in a track array direction are different.

2. The optical body (10) according to claim 1, wherein
a plan-view shape of the structures (13, 14) has an asymmetric shape with respect to the one plane direction.

3. The optical body (10) according to claim 2, wherein
in a case of dividing the plan-view shape of the structure into two regions by a line that bisects a quadrilateral circumscribing the structure along an array direction of the structures,
an area ratio obtained by dividing the area of the smaller of the two regions by the area of the larger region is 0.97 or less.

4. The optical body (10) according to claim 3, wherein
the area ratio is 0.95 or less.

5. The optical body (10) according to claim 3 or 4, wherein
the area ratio is 0.95 or less, and 0.33 or greater.

6. The optical body (10) according to any one of claims 1 to 5, wherein
a perpendicular cross-sectional shape of the structures (13, 14) has an asymmetric shape with respect to the one plane direction.

7. The optical body (10) according to claim 6, wherein
a position of an apex of the perpendicular cross-sectional shape of the structures (13, 14) is displaced in a track direction of the structures (13, 14) with respect to a center point of the track direction.

8. The optical body (10) according to claim 7, wherein
a displacement ratio, which is obtained by dividing a displacement of the position of the apex by a dot pitch of the structures (13, 14), is 0.03 or greater, and optionally 0.5 or less.

9. The optical body (10) according to any one of claims 1 to 8, wherein
the structures (13, 14) include a cured curing resin.

10. The optical body (10) according to any one of claims 1 to 9, wherein
adjacent structures (13, 14) abut each other.

11. A master, on a surface of which is formed an inverse shape of the concave-convex structure (12) according to any one of claims 1 to 10.

12. The master according to claim 11, wherein
the master is plate-like, hollow round cylindrical, or round columnar.

13. A method for manufacturing an optical body (10), comprising:
forming the concave-convex structure (12) on a base material by using the master according to claim 11 or 12 as a transfer mold.

14. The optical body (10) according to any one of claims 1 to 10, wherein
the structures (13, 14) are arranged at positions that are slightly shifted from a track length direction in a direction perpendicular to the track length direction.

15. The optical body (10) according to any one of claims 1 to 10 and 14, wherein
a floor ratio of the structures (13, 14) is less than 10%,
the floor ratio is the ratio of the floor area of all concavities (14) with respect to the total area of the surface on which the concave-convex structure (12) is formed.

## Patentansprüche

1. Ein optischer Körper (10) mit einer konkav-konvexen Struktur (12), in dem Strukturen (13, 14) mit konvexen Formen oder konkaven Formen in einem durchschnittlichen Zyklus angeordnet bzw. aufgereiht sind, der kleiner oder gleich den Wellenlängen des sichtbaren Lichts ist, wobei
die Strukturen (13, 14) eine asymmetrische Form in Bezug auf irgendeine Ebenenrichtung, die senkrecht zu einer Dickenrichtung des optischen Körpers (10) ist,
**dadurch gekennzeichnet, dass**
ein Rastermaß bzw. Anordnungsabstand (*array pitch*) der Strukturen (13, 14) in der einen Ebenenrichtung sich unterscheidet von einem Anordnungsabstand der konkav-konvexen Struktur (12) in einer anderen Ebenenrichtung,
der optische Körper (10) länglich ist,
die konkav-konvexe Struktur (12) eine parallele Anordnung von Spuren ist, die die Strukturen (13, 14) beinhalten, die in Längsrichtung des optischen Körpers (10) aufgereiht sind,
die Strukturen (13, 14) periodisch auf dem optischen Körper (10) angeordnet sind, und **dass**
ein Punktabstand (L12), der ein durchschnittlicher Zyklus zwischen den Strukturen (13, 14) ist, die in einer Spurlängsrichtung angeordnet sind, und ein Spurabstand (L13), der ein durchschnittlicher Zyklus zwischen den Strukturen (13, 14) ist, die in einer Spuranordnungsrichtung angeordnet sind, unterschiedlich sind.

2. Der optische Körper (10) nach Anspruch 1, wobei
eine Form der Strukturen (13, 14) in Draufsicht eine asymmetrische Form in Bezug auf die eine Ebenenrichtung aufweist.

3. Der optische Körper (10) nach Anspruch 2, wobei
in einem Fall, in dem die Form der Struktur in Draufsicht durch eine Linie in zwei Regionen geteilt wird, die ein Viereck halbiert, das die Struktur entlang einer Anordnungsrichtung der Strukturen umschreibt,
ein Flächenverhältnis, das durch Division der Fläche der kleineren der beiden Regionen durch die Fläche der größeren Region erhalten wird, 0,97 oder weniger beträgt.

4. Der optische Körper (10) nach Anspruch 3, wobei
das Flächenverhältnis 0,95 oder weniger beträgt.

5. Der optische Körper (10) nach Anspruch 3 oder 4, wobei
das Flächenverhältnis 0,95 oder weniger und 0,33 oder mehr beträgt.

6. Der optische Körper (10) nach irgendeinem der Ansprüche von 1 bis 5, wobei
eine senkrechte Querschnittsform der Strukturen (13, 14) eine asymmetrische Form hat in Bezug auf die eine Ebenenrichtung.

7. Der optische Körper (10) nach Anspruch 6, wobei
eine Position eines Scheitelpunkts der senkrechten Querschnittsform der Strukturen (13, 14) versetzt ist in einer Spurrichtung der Strukturen (13, 14) in Bezug auf einen Mittelpunkt der Spurrichtung.

8. Der optische Körper (10) nach Anspruch 7, wobei
ein Versatzverhältnis, das man erhält durch Dividieren eines Versatzes der Position des Scheitelpunkts durch einen Punktabstand der Strukturen (13, 14), 0,03 oder größer und optional 0,5 oder kleiner beträgt.

9. Der optische Körper (10) nach irgendeinem der Ansprüche von 1 bis 8, wobei die Strukturen (13, 14) ein gehärtetes Härtungsharz beinhalten.

10. Der optische Körper (10) nach irgendeinem der Ansprüche von 1 bis 9, wobei benachbarte Strukturen (13, 14) aneinanderstoßen.

11. Eine Vorlage bzw. Bezugsformstück (*master*), auf dessen Oberfläche eine inverse Form der konkav-konvexen Struktur (12) nach ein irgendeinem der Ansprüche von 1 bis 10 gebildet ist.

12. Die Vorlage nach Anspruch 11, wobei
die Vorlage plattenförmig, hohl rund zylindrisch oder rund säulenförmig ist.

13. Ein Verfahren zur Herstellung eines optischen Körpers (10), das Folgendes umfasst:
Ausbilden der konkav-konvexen Struktur (12) auf einem Ausgangsmaterial unter Verwendung der Vorlage nach Anspruch 11 oder 12 als Transferform.

14. Der optische Körper (10) nach irgendeinem der Ansprüche von 1 bis 10, wobei
die Strukturen (13, 14) an Positionen angeordnet sind, die ausgehend von einer Spurlängsrichtung in eine Richtung senkrecht zur Spurlängsrichtung leicht verschoben sind.

15. Der optische Körper (10) nach irgendeinem der Ansprüche von 1 bis 10 und 14, wobei
ein Bodenverhältnis (*floor ratio*) der Strukturen (13, 14) weniger als 10% beträgt,
das Bodenverhältnis das Verhältnis der Bodenfläche aller Konkavitäten (14) in Bezug auf die Gesamtfläche der Oberfläche ist, auf der die konkav-konvexe Struktur (12) gebildet ist.

## Revendications

1. Un corps optique (10) ayant une structure concave-convexe (12) dans lequel des structures (13, 14) ayant des formes convexes ou des formes concaves sont disposées en réseau sur un cycle moyen inférieur ou égal aux longueurs d'onde de la lumière visible, sachant que
les structures (13, 14) ont une forme asymétrique par rapport à une direction de plan quelconque perpendiculaire à une direction de l'épaisseur du corps optique (10),
**caractérisé en ce que**
un pas (*pitch*) de réseau des structures (13, 14) dans ladite direction de plan est différent d'un pas de réseau de la structure concave-convexe (12) dans une autre direction de plan,
le corps optique (10) est allongé,
la structure concave-convexe (12) est un réseau parallèle de pistes qui inclut les structures (13, 14) alignées dans le sens de la longueur du corps optique (10),
les structures (13, 14) sont disposées en réseau périodiquement sur le corps optique (10), **et que**
un pas de point (L12), qui est un cycle moyen entre les structures (13, 14) disposées en réseau dans une direction de longueur de piste, et un pas de piste (L13), qui est un cycle moyen entre les structures (13, 14) disposées en réseau dans une direction de piste sont différents.

2. Le corps optique (10) d'après la revendication 1, sachant que
une forme des structures (13, 14) vue en plan présente une forme asymétrique par rapport à ladite direction de plan.

3. Le corps optique (10) d'après la revendication 2, sachant que
dans le cas d'une division de la forme vue en plan de la structure en deux régions par une ligne qui coupe en deux un quadrilatère circonscrivant la structure le long d'une direction de réseau des structures,
un rapport de superficie, obtenu en divisant la superficie de la plus petite des deux régions par la superficie de la plus grande région, est de 0,97 ou moins.

4. Le corps optique (10) d'après la revendication 3, sachant que
le rapport de superficie est de 0,95 ou moins.

5. Le corps optique (10) d'après la revendication 3 ou 4, sachant que
le rapport de superficie est de 0,95 ou moins, et de 0,33 ou plus.

6. Le corps optique (10) d'après l'une quelconque des revendications de 1 à 5, sachant que
une forme de section transversale perpendiculaire des structures (13, 14) présente une forme asymétrique par rapport à ladite direction de plan.

7. Le corps optique (10) d'après la revendication 6, sachant que
une position d'un sommet de la forme de la section transversale perpendiculaire des structures (13, 14) est déplacée dans une direction de piste des structures (13, 14) par rapport à un point central de la direction de piste.

8. Le corps optique (10) d'après la revendication 7, sachant que
un rapport de déplacement, qui est obtenu en divisant un déplacement de la position du sommet par un pas de points des structures (13, 14), est de 0,03 ou plus, et éventuellement de 0,5 ou moins.

9. Le corps optique (10) d'après l'une quelconque des revendications de 1 à 8, sachant que
les structures (13, 14) incluent une résine durcissable durcie.

10. Le corps optique (10) d'après l'une quelconque des revendications de 1 à 9, sachant que
des structures (13, 14) adjacentes sont en butée les unes contre les autres.

11. Un moule maître ou modèle (*master*), sur une surface duquel est formée une forme inverse de la structure concave - convexe (12) d'après l'une quelconque des revendications de 1 à 10.

12. Le modèle d'après la revendication 11, sachant que
le maître est en forme de plaque, de cylindre rond creux ou de colonne ronde.

13. Un procédé de fabrication d'un corps optique (10), comprenant le fait de :
former la structure concave-convexe (12) sur un matériau de base en utilisant le modèle d'après la revendication 11 ou 12 comme moule de transfert.

14. Le corps optique (10) d'après l'une quelconque des revendications de 1 à 10, sachant que
les structures (13, 14) sont disposées en réseau à des positions légèrement décalées par rapport à la direction de longueur de piste dans une direction perpendiculaire à la direction de longueur de piste.

15. Le corps optique (10) d'après l'une quelconque des revendications de 1 à 10 et 14, sachant que
un rapport de sol des structures (13, 14) est inférieur à 10 %,
le rapport de sol est le rapport entre la superficie de toutes les concavités (14) et la surface totale de la surface sur laquelle la structure concave-convexe (12) est formée.
